# EUROPEAN PATENT APPLICATION

(11) **EP 4 484 048 A1**
(43) Date of publication of application: **01.01.2025**
(21) Application number: 22927332.1
(22) Date of filing: 15.12.2022
(51) Int. Cl.: B23K 26/00

(54) **LASER PROCESSING DEVICE**

(30) Priority: 21.02.2022 JP 2022025071
(71) Applicant: PANASONIC INTELLECTUAL PROPERTY MANAGEMENT CO., LTD., Kadoma-shi Osaka 571-0057 (JP)
(72) Inventor: OTA, Takahiro, Oaza Kadoma, Kadoma-shi, Osaka 571-8506 (JP)
(74) Representative: Murgitroyd & Company
(86) International application number: PCT/JP2022/046294
(87) International publication number: WO 2023/157446

(57) **Abstract**

A main control unit (62) that controls a laser light source (34) that emits laser light (LW) acquires monitoring data (Da) for a laser processing device (10A). A storage unit (63) stores the monitoring data (Da). A display unit (71) displays a laser output verification screen that includes a display of a portion of the monitoring data (Da). The main control unit (62) can switch the display mode in which the laser output verification screen is displayed between a first display mode in which only first display data (D1) from the monitoring data (Da) is displayed and a second display mode in which at least second display data (D2) from the monitoring data (Da) is displayed. The first display data (D1) includes data that makes it possible to verify the output state of the laser light (LW) and data that makes it possible to verify settings related to the output of the laser light (Lw). The second display data (D2) is data that is different from the first display data (D1).

## Description

### TECHNICAL FIELD

The present disclosure relates to a laser processing device.

### BACKGROUND ART

A conventional laser processing device irradiates a workpiece with a laser beam to perform a marking process that marks characters or the like on a surface of the workpiece. Patent Literature 1 discloses an example of a laser processing device configured to expose a wafer to a laser beam. The laser processing device is controlled based on control information stored in a server.

### CITATION LIST

### Patent Literature

Patent Literature 1: International Patent Publication No. WO2017/068619

### SUMMARY OF INVENTION

### Technical Problem

When the laser processing device encounters a failure, downtime occurs. It is desirable that the downtime be minimized. Downtime may be reduced, for example, when a service person performing maintenance or repair of the laser processing device identifies the cause of the failure in a shorter amount of time. The service person needs information indicating a state of the laser processing device in order to identify the cause of the failure.

### Solution to Problem

An aspect of the present disclosure is a laser processing device that processes a workpiece with a laser beam. The laser processing device includes a laser light source configured to emit the laser beam, a controller configured to control the laser light source and obtain monitoring data on the laser processing device, storage that stores the monitoring data obtained by the controller, and a display configured to show a monitoring data display screen that includes presentation of at least part of the monitoring data in accordance with a control executed by the controller. The monitoring data includes first display data and second display data. The controller is configured to switch a display mode in which the monitoring data display screen is displayed between a first display mode that shows only the first display data in the monitoring data and a second display mode that shows at least the second display data in the monitoring data. The first display data includes data that allows an output state of the laser beam to be checked and data that allows a setting related to an output of the laser beam to be checked. The second display data differs from the first display data.

### Advantageous Effects of Invention

The laser processing device according to the present disclosure reduces downtime.

### BRIEF DESCRIPTION OF DRAWINGS

Fig. 1 is a perspective view showing one embodiment of a laser processing device.
Fig. 2 is a block diagram showing the electrical configuration of the laser processing device shown in Fig. 1.
Fig. 3 is a diagram showing an initial screen of the laser processing device shown in Fig. 1.
Fig. 4 is a diagram showing a laser output check screen of the laser processing device shown in Fig. 1.
Fig. 5 is a diagram showing a laser output check screen of the laser processing device shown in Fig. 1.
Fig. 6 is a diagram showing monitoring items when measuring a laser output of the laser processing device shown in Fig 1.
Fig. 7 is a diagram showing monitoring items of the laser processing device shown in Fig 1.
Fig. 8 is a diagram showing monitoring items of the laser processing device shown in Fig 1.
Fig. 9 is a diagram showing monitoring items of the laser processing device shown in Fig 1.
Fig. 10 is a block diagram showing the electrical configuration of a modified example of a laser processing device.
Fig. 11 is a block diagram showing the electrical configuration of a modified example of a laser processing device.

### DESCRIPTION OF EMBODIMENTS

An embodiment of a laser processing device will be described below.

The embodiments described below exemplify configurations and methods for embodying a technical concept and are not intended to limit the material, shape, structure, layout, dimensions, and the like of each component to those described below. Elements in the figures are illustrated for simplicity and clarity and have not necessarily been drawn to scale. The accompanying drawings only illustrate embodiments of the present disclosure and are not intended to limit the present disclosure. In the present disclosure, the terms "first," "second," "third," and the like are used to distinguish subjects and not used for ordinal purposes.

### Outline of Laser Processing Device

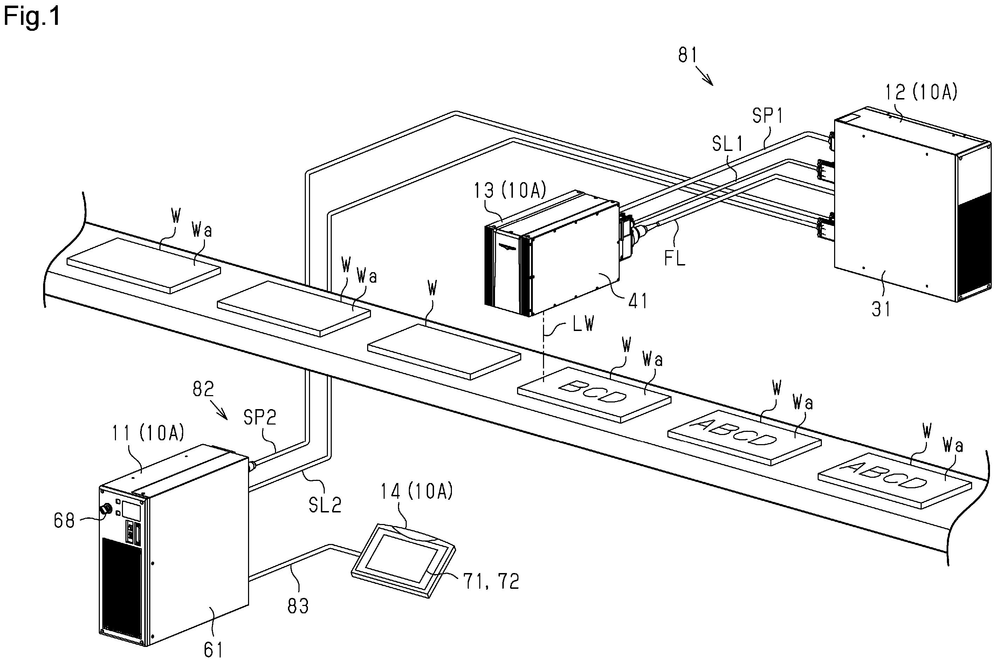

As shown in Fig. 1, a laser processing device 10A includes, for example, a controller unit 11, a light source unit 12, a head unit 13, and a console 14. The light source unit 12 is, for example, connected by first electrical cables 81 and an optical fiber cable FL to the head unit 13. Further, the light source unit 12 is, for example, connected by second electrical cables 82 to the controller unit 11. The first electrical cables 81 include, for example, a first power cable SP1 and a first signal cable SL1. The second electrical cables 82 include a second power cable SP2 and a second signal cable SL2. The controller unit 11 is supplied with AC power by a power cable, which is not shown. The laser processing device 10A is operated by the supplied AC power to process a workpiece W. The console 14 is connected by a third electrical cable 83 to the controller unit 11. The console 14 is arranged to configure various settings in the laser processing device 10A. In addition, the console 14 is arranged to show the state of the laser processing device 10A and various types of information.

The controller unit 11 controls the light source unit 12 and the head unit 13. The light source unit 12 generates a laser beam LW that processes the workpiece W. The laser beam LW generated in the light source unit 12 is transmitted by the optical fiber cable FL to the head unit 13. The head unit 13 emits the laser beam LW toward the workpiece W.

### Configurations of Units

### Light Source Unit

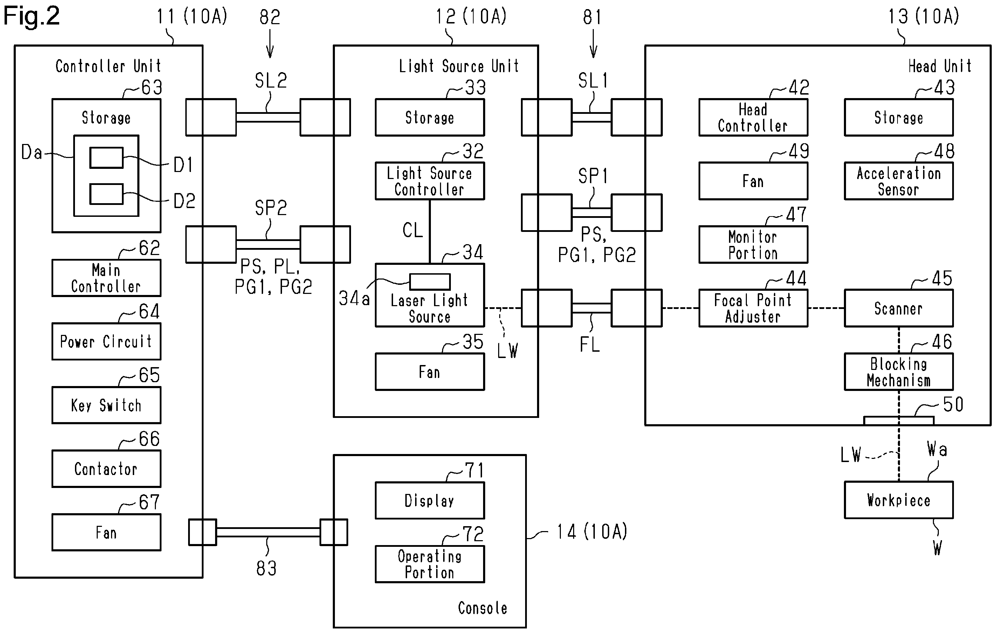

As shown in Figs. 1 and 2, the light source unit 12 includes a case 31. In the case 31, the light source unit 12 includes a light source controller 32, storage 33, and a laser light source 34. The light source unit 12 may also include a fan 35 in the case 31 to cool the laser light source 34 and various electronic components.

The light source controller 32 controls the laser light source 34. The light source controller 32 includes, for example, an oscillator unit substrate. A temperature sensor is arranged on the oscillator unit substrate to measure the temperature of the inside of the light source unit 12. The light source controller 32 obtains internal temperature data on the light source unit 12 from the temperature sensor. In addition, a humidity sensor is arranged on the oscillator unit substrate to measure the humidity of the vicinity of the oscillator unit substrate. The light source controller 32 obtains humidity data on the vicinity of the oscillator unit substrate from the humidity sensor. In addition, the light source unit 12 may include a timer for measuring time.

The storage 33 stores information on the light source unit 12. The information on the light source unit 12 includes identification information about the light source unit 12. The identification information of the light source unit 12 includes, for example, model information (model) and unique information (serial number) of the light source unit 12. The fan 35 is controlled by, for example, the light source controller 32.

The laser light source 34 includes a laser oscillator 34a that outputs the laser beam LW. The laser light source 34 emits the laser beam LW. The laser light source 34 emits the laser beam LW and may be, for example, a fiber laser, a YAG laser, a CO₂ laser, or the like. The laser oscillator 34a may include a temperature sensor that measures the temperature of the inside of the laser oscillator 34a. The light source controller 32 obtains internal temperature data on the laser oscillator 34a from the laser oscillator 34a.

The laser light source 34 may include a power monitor that measures output of the laser beam LW emitted from the laser light source 34. The power monitor transmits the measurement result to the light source controller 32.

The light source controller 32 is configured to communicate with the controller unit 11 through the second signal cable SL2. The light source controller 32 is also configured to communicate with the head unit 13 through the first signal cable SL1.

The light source controller 32, the storage 33, and the fan 35 are configured to be operated by system power voltage PS that is supplied by the second power cable SP2. The laser light source 34 is operated by laser power voltage PL that is supplied by the second power cable SP2. The laser power voltage PL is supplied to the light source controller 32 by the second power cable SP2 and then supplied from the light source controller 32 to the laser light source 34. The light source controller 32 outputs a current supplied to the laser oscillator 34a, that is, data of oscillator current CL (current value), through the second signal cable SL2 to the controller unit 11.

### Head Unit

The head unit 13 includes a case 41. In the case 41, the head unit 13 includes, for example, a head controller 42, storage 43, a focal point adjuster 44, a scanner 45, a blocking mechanism 46, a monitor portion 47, and an acceleration sensor 48. The head unit 13 may include a fan 49 in the case 41 to cool various electronic components arranged in the case 41. The head unit 13 further includes protective glass 50. The protective glass 50 is held by the case 41.

The storage 43 stores information about the head unit 13. The information about the head unit 13 includes identification information of the head unit 13. The identification information of the head unit 13 includes model information (model) and unique information (serial number) of the head unit 13.

The focal point adjuster 44 adjusts the focal point (focal point distance) of the laser beam LW. The focal point adjuster 44 includes lenses, which are laid out on the optical axis of the laser beam LW, and an actuator, which moves the lenses in the direction of the optical axis. The head controller 42 controls the actuator to control the positions of the lenses. The positions of the lenses (distance between lenses) adjust the focal point of the emitted laser beam LW.

The scanner 45 emits the laser beam LW toward the workpiece W. The scanner 45 scans the laser beam LW over a processing surface Wa of the workpiece W. The scanner 45 includes, for example, two galvano mirrors and two galvano motors (e.g., servomotors and actuators) that drive the two galvano mirrors. The head controller 42 controls the two galvano motors so that the two galvano mirrors are controlled through the two galvano motors. The laser beam LW is reflected by the scanner 45 and emitted through the protective glass 50 to the outside of the head unit 13. The scanner 45 performs scanning in two directions (two-dimensional direction) on the processing surface Wa of the workpiece W.

The blocking mechanism 46 is configured to permit and block the laser beam LW. The blocking mechanism 46 includes, for example, a shutter and an actuator that drives the shutter. The shutter is supported to be movable between a closed position, where the shutter blocks the laser beam LW, and an open position, where the shutter does not block the laser beam LW. The actuator switches the position of the shutter between the closed position and the open position. The blocking mechanism 46 is controlled by the head controller 42. In an example, when the head controller 42 transmits a closing signal, the blocking mechanism 46 places the shutter at the closed position. When the head controller 42 transmits an open signal, the blocking mechanism 46 places the shutter at the open position. In an example, the head unit 13 includes a closed position detection sensor configured to detect that the shutter is located at the closed position and an open position detection sensor configured to detect that the shutter is located at the open position. The detection result of each position detection sensor is transmitted to the head controller 42. The head unit 13 may include multiple blocking mechanisms 46.

The monitor portion 47 measures output (optical power) of the laser beam LW transmitted from the light source unit 12 through the optical fiber cable FL. The monitor portion 47 transmits the measurement result to the head controller 42. In an example, the monitor portion 47 includes an optical receiver configured to receive the laser beam LW. The optical receiver outputs a signal corresponding to the output of the received laser beam LW. In an example, the monitor portion 47 monitors the output of the laser beam LW transmitting from the scanner 45 to the blocking mechanism 46. The monitor portion 47 performs an analog-digital conversion (hereafter, referred to as AD conversion) of the signal output from the optical receiver to obtain a digital value corresponding to the output of the laser beam LW. The monitor portion 47 transmits the digital value to the head controller 42. The monitor portion 47 may be a power monitor.

The acceleration sensor 48 measures acceleration applied to the head unit 13. The acceleration sensor 48 measures acceleration in an X-axis direction, which is set in any manner, acceleration in a Y-axis direction orthogonal to the X-axis, and acceleration in a Z-axis direction orthogonal to the X-axis and the Y-axis. The acceleration sensor 48 transmits the measured data to the head controller 42.

The head unit 13 may include a rotational sensor configured to detect rotation produced by a motor that drives the fan 49. The rotational sensor transmits a rotation detection signal, which is synchronized with the rotation of the motor, to the head controller 42. The rotation detection signal is, for example, a pulse signal.

The head controller 42 includes, for example, a head unit substrate. A temperature sensor is arranged on the head unit substrate to measure the temperature of the head unit substrate. The head controller 42 obtains temperature data on the head unit substrate from the temperature sensor.

The head controller 42 controls the focal point adjuster 44, the scanner 45, the blocking mechanism 46, and the fan 49.

The head controller 42 is configured to exchange signals with the head unit 13 and the controller unit 11 through the first signal cable SL1 and the second signal cable SL2, which is located between the light source unit 12 and the controller unit 11.

The head controller 42 is configured to be operated by the system power voltage PS supplied by the first power cable SP1. The scanner 45 is operated by a positive galvano power voltage PG1 and a negative galvano power voltage PG2 supplied by the first power cable SP1. The positive galvano power voltage PG1 and the negative galvano power voltage PG2 are supplied to the head controller 42 and then supplied from the head controller 42 to the scanner 45.

### Controller Unit

The controller unit 11 includes a case 61. In the case 61, the controller unit 11 includes a main controller 62, storage 63, a power circuit 64, a key switch 65, and a contactor 66. The controller unit 11 may further include a fan 67 to cool various electronic components arranged in the case 61.

The key switch 65 is a power switch used to activate and deactivate the controller unit 11. The key switch 65 is turned on and off by a rotational operation performed by an operator (e.g., user or service person) on a power key 68 shown in Fig. 1.

The power circuit 64 is connected by a power cable, which is not shown in the drawings, to an external power supply such as a commercial power supply. The power circuit 64 supplies power to the controller unit 11, the light source unit 12, and the head unit 13 of the laser processing device 10A. The power circuit 64 may also supply power to the console 14 to drive the console 14.

The power circuit 64 supplies the system power voltage PS to the main controller 62. The key switch 65 is turned on and off so that the power circuit 64 supplies and stops supplying power to the main controller 62. The system power voltage PS is supplied to the main controller 62. The system power voltage PS is also supplied to the light source controller 32 of the light source unit 12 by the second power cable SP2. Further, the system power voltage PS is supplied from the light source unit 12 to the head controller 42 of the head unit 13 by the first power cable SP1. Thus, the controller unit 11, the light source unit 12, and the head unit 13 are each operated by the system power voltage PS supplied when the key switch 65 is turned on.

The power circuit 64 supplies the laser power voltage PL to the light source controller 32 of the light source unit 12. The power circuit 64 outputs and stops outputting the laser power voltage PL in accordance with control of the main controller 62.

The power circuit 64 supplies the positive galvano power voltage PG1 and the negative galvano power voltage PG2 to the scanner 45 of the head unit 13. The power circuit 64 outputs and stops outputting the positive galvano power voltage PG1 in accordance with control of the main controller 62. The power circuit 64 outputs and stops outputting the negative galvano power voltage PG2 in accordance with control of the main controller 62.

The power circuit 64 transmits information (voltage values) of the system power voltage PS, the laser power voltage PL, the positive galvano power voltage PG1, and the negative galvano power voltage PG2 to the main controller 62.

The contactor 66 is controlled by the main controller 62. The contactor 66 opens or closes in accordance with a control signal received from the main controller 62. When the contactor 66 is open, the power circuit 64 is configured to supply the laser power voltage PL to the light source controller 32 and supply the positive galvano power voltage PG1 and the negative galvano power voltage PG2 to the scanner 45. When the contactor 66 is closed, the power circuit 64 stops supplying the laser power voltage PL to the light source controller 32 and stops supplying the positive galvano power voltage PG1 and the negative galvano power voltage PG2 to the scanner 45.

The storage 63 stores various types of information. The storage 63 stores, for example, identification information of units (e.g., light source unit 12 and head unit 13) that are connected to the controller unit 11. The storage 63 stores processing data for processing the workpiece W. The processing data includes, for example, information about processing patterns such as characters or figures that are to be printed on the processing surface Wa of the workpiece W.

The controller unit 11 may include a rotational sensor configured to detect rotation produced by a motor that drives the fan 67. The rotational sensor transmits a rotation detection signal, which is synchronized with the rotation of the motor, to the main controller 62. The rotation detection signal is, for example, a pulse signal.

The main controller 62 includes, for example, a clock, a counter, and a timer. The main controller 62 includes, for example, a controller unit substrate. A temperature sensor is arranged on the controller unit substrate to measure the temperature of the controller unit substrate. The head controller 42 obtains temperature data on the controller unit substrate from the temperature sensor.

The main controller 62 is configured to communicate with the light source controller 32 of the light source unit 12 and the head controller 42 of the head unit 13 through the first signal cable SL1 and the second signal cable SL2. The main controller 62 transmits control data to the light source controller 32 and the head controller 42 based on the processing data and the like. In an example, based on the processing data, the main controller 62 generates control data that includes scan position data pieces (coordinate data pieces), which correspond to processing positions on the workpiece W, and on/off data. The main controller 62 transmits the control data to the light source controller 32 and the head controller 42.

The light source controller 32 controls the laser light source 34 based on the control data. In an example, the light source controller 32 controls output of the laser beam LW emitted from the laser light source 34.

Based on the control data, the head controller 42 controls the scanner 45 so that the workpiece W is processed with the laser beam LW.

### Console

The console 14 includes, for example, a display 71 and an operating portion 72. The display 71 is configured to show various types of information about the laser processing device 10A. The operating portion 72 is configured to receive an input of data from a user. The console 14 includes, for example, a general-purpose terminal such as a tablet terminal, a laptop computer, a personal digital assistant (PDA), or a smartphone, and dedicated application software installed in the terminal.

The console 14 instructs the controller unit 11 to perform various controls and to select an operation mode in accordance with an operation of the operating portion 72. The instructed controls include, for example, a start of processing and a stop of processing. The operation modes include a processing mode, a laser output measuring mode, a laser output automatic correction mode, and a laser output manual correction mode. The display 71 shows characters or the like to allow selection of the operation modes. The console 14 gives an instruction of the operation mode selected by operation of the operating portion 72 to the main controller 62 of the controller unit 11.

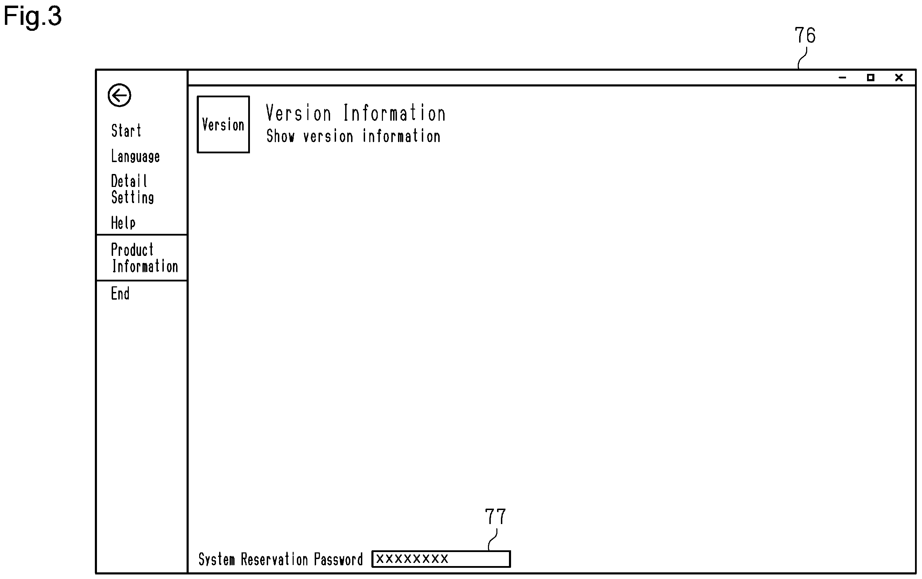

Figs. 3 to 5 show examples of the screen shown by the main controller 62 on the display 71 when the laser processing device 1 0A is activated by an operation of the power key 68.

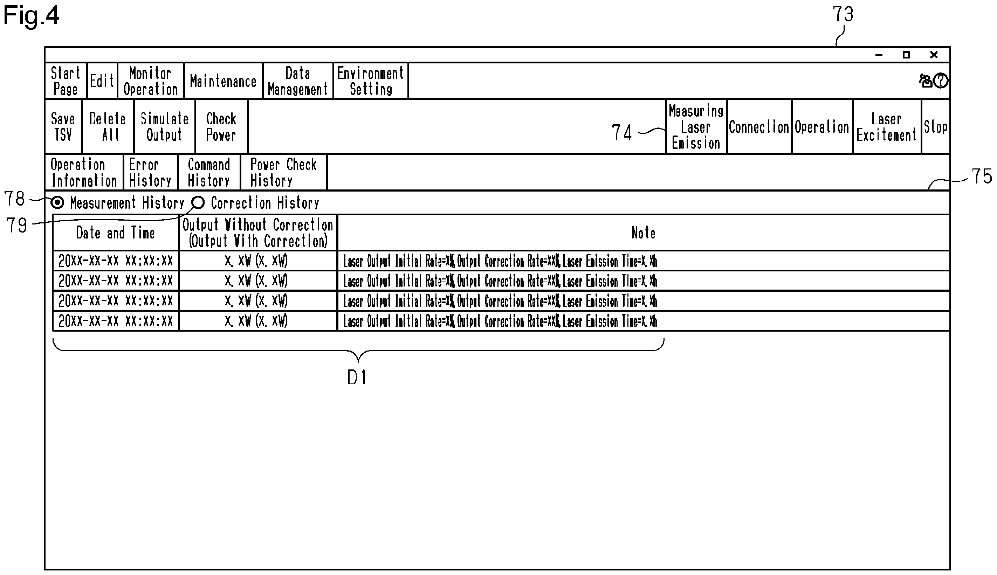

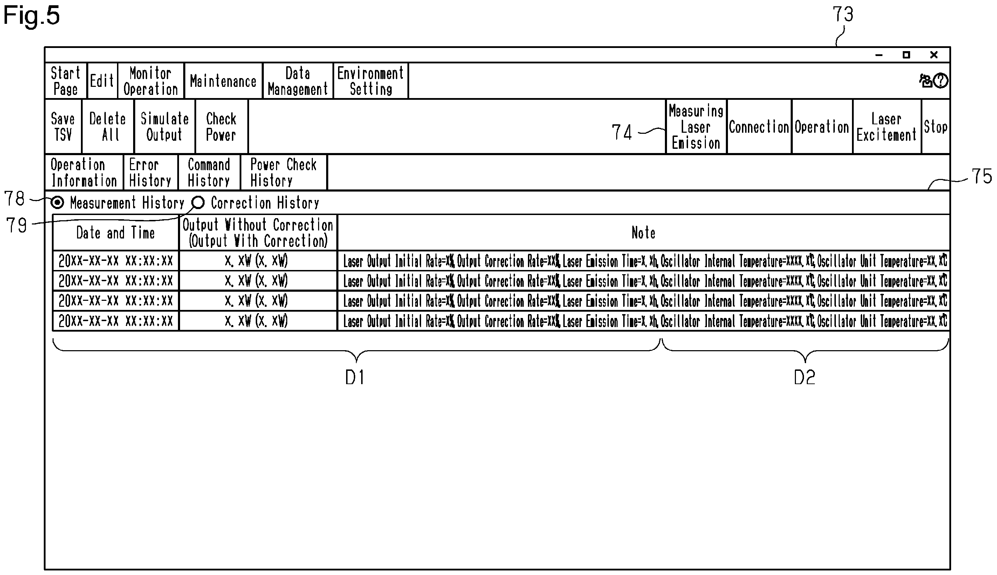

Fig. 3 is an example of an initial screen 76 shown on the display 71. Figs. 4 and 5 are each an example of a laser output check screen 73 showing information related to the output of the laser beam LW. Fig. 4 is an example of the laser output check screen 73 displayed in a first display mode. Fig. 5 is an example of the laser output check screen 73 displayed in a second display mode.

### Operation Mode

When the system power voltage PS is supplied to the main controller 62, the main controller 62 executes an initialization process according to activation and then executes a process in the selected operation mode.

The initialization process checks the configuration of the laser processing device 10A and supplies the laser power voltage PL, the positive galvano power voltage PG 1, and the negative galvano power voltage PG2 to the light source unit 12 and the head unit 13, which are connected to the controller unit 11.

The main controller 62 of the controller unit 11 determines whether the light source unit 12, which is connected to the controller unit 11, is drivable. Further, the main controller 62 determines whether the head unit 13, which is connected to the controller unit 11 via the light source unit 12, is drivable. Based on the determination result, the main controller 62 controls the power circuit 64 and the contactor 66 to supply or stop supplying the laser power voltage PL, the positive galvano power voltage PG1, and the negative galvano power voltage PG2.

### Processing Mode

The processing mode is a mode for forming a processing pattern on the workpiece W with the laser beam LW. The processing pattern includes characters, symbols, figures, and the like formed on the workpiece W.

When the processing mode is selected in the console 14 and an instruction to start processing is issued, the main controller 62 initiates the processing on the workpiece W. The main controller 62 executes a process for emitting the laser beam LW toward the workpiece W based on the processing data. The main controller 62 generates control data based on the processing data related to characters or the like that are to be printed. The control data includes scan position data pieces (coordinate data pieces) corresponding to the processing positions of the workpiece W and laser on/off data. The main controller 62 transmits the control data through the second signal cable SL2 to the light source controller 32 of the light source unit 12.

The light source controller 32 obtains the laser on/off data related to the light source unit 12 from the transmitted control data. Further, the light source controller 32 transmits the control data through the first signal cable SL1 to the head controller 42 of the head unit 13. The light source controller 32 controls the laser light source 34 based on the control data so that the laser light source 34 emits the laser beam LW.

The head controller 42 obtains the scan position data related to the head unit 13 from the transmitted control data. Based on the control data, the head controller 42 controls the focal point adjuster 44 and the scanner 45 to scan the laser beam LW toward the workpiece W. Thus, the laser processing device 10A forms the processing pattern on the processing surface Wa of the workpiece W.

### Laser Output Measuring Mode

The laser output measuring mode is a mode for performing monitoring related to output of the laser beam LW. The monitoring related to output of the laser beam LW includes a laser output measurement that measures output of the laser beam LW. In an example, when the operating portion 72 is operated to press a measuring laser emission button 74 on the laser output check screen 73, the controller unit 11 is instructed to operate in the laser output measuring mode. When the instruction to operate in the laser output measuring mode is received, the main controller 62 controls the laser beam LW to be emitted when the blocking mechanism 46 is placed in the closed position. For example, the main controller 62 controls the laser light source 34 so that a laser beam LW without output correction and a laser beam LW with output correction are emitted. The laser beam LW without output correction corresponds to a laser beam that is emitted by the laser light source 34 when supplied with the laser power voltage PL and the oscillator current CL that are in the same condition as the time of shipping the laser processing device 10A. The laser beam LW with output correction corresponds to a laser beam LW that is emitted by the laser light source 34 when supplied with the laser power voltage PL and the oscillator current CL that are in the same condition as when the output is corrected immediately before the instruction of the laser output measuring mode. The laser processing device 10A performs various types of monitoring related to output of the laser beam LW including the laser output measurement. The laser output measurement is performed on each of the laser beam LW without output correction and the laser beam LW with output correction. Output of the laser beam LW is actually measured by the monitor portion 47. Among various monitoring data pieces obtained by the monitoring, the main controller 62 shows predetermined data pieces that are to be shown on the display 71.

### Laser Output Automatic Correction Mode

The laser output automatic correction mode is a mode in which the main controller 62 controls the output of the laser beam LW so that the output of the laser beam LW is corrected to a predetermined set value. When the operating portion 72 is operated to select the laser output automatic correction mode, the controller unit 11 is instructed to operate in the laser output automatic correction mode. When the instruction to operate in the laser output automatic correction mode is received, the main controller 62 calculates a correction rate using the set value and the output of the laser beam LW (i.e., measurement result of laser output measurement) that was measured immediately before the instruction to operate in the laser output automatic correction mode. The correction rate is a rate (%) of the set value to the measured output value of the laser beam LW. When the main controller 62 controls the light source controller 32 so that the laser power voltage PL and the oscillator current CL are supplied to the laser light source 34 in accordance with the calculated correction rate, the output of the laser beam LW is corrected in accordance with the correction rate.

After calculating the correction rate, the main controller 62 performs the laser output measurement on each of the laser beam LW without output correction and the laser beam LW with output correction. The laser beam LW without output correction corresponds to a laser beam that is emitted by the laser light source 34 when supplied with the laser power voltage PL and the oscillator current CL that are in the same condition as the time of shipping the laser processing device 10A. The main controller 62 controls the laser light source 34 so that the laser beam LW without output correction and the laser beam LW with output correction are emitted when the shutter of the blocking mechanism 46 is placed in the closed position. Then, the laser processing device 10A performs various types of monitoring related to output of the laser beam LW, including the laser output measurement, on each of the laser beam LW without output correction and the laser beam LW with output correction. Among various monitoring data pieces obtained by the monitoring, the main controller 62 shows predetermined data pieces that are to be shown on the display 71.

### Laser Output Manual Correction Mode

The laser output manual correction mode is a mode for correcting the output of the laser beam LW at a correction rate instructed by the user. When the operating portion 72 is operated to select the laser output manual correction mode, the controller unit 11 is instructed to operate in the laser output manual correction mode. The user operates the operating portion 72 to issue an instruction of the correction rate, which corrects the output of the laser beam LW, to the controller unit 11. The main controller 62 controls the light source controller 32 so that the laser power voltage PL and the oscillator current CL are supplied to the laser light source 34 in accordance with the instructed correction rate. As a result, the output of the laser beam LW is corrected in accordance with the instructed correction rate.

The main controller 62 performs the laser output measurement on each of the laser beam LW without output correction and the laser beam LW with output correction at the instructed correction rate. The laser beam LW without output correction corresponds to a laser beam that is emitted by the laser light source 34 when supplied with the laser power voltage PL and the oscillator current CL that are in the same condition as the time of shipping the laser processing device 10A. The main controller 62 controls the laser light source 34 so that the laser beam LW without output correction and the laser beam LW with output correction at the instructed correction rate are emitted when the shutter of the blocking mechanism 46 is placed in the closed position. Then, the laser processing device 10A performs various types of monitoring related to output of the laser beam LW, including the laser output measurement, on each of the laser beam LW without output correction and the laser beam LW with output correction at the instructed correction rate. Among various monitoring data pieces obtained by the monitoring, the main controller 62 shows predetermined data pieces that are to be shown on the display 71.

### Monitoring Data

The main controller 62 of the controller unit 11 obtains monitoring data Da about the laser processing device 10A. For example, when executing a process in each operation mode; that is, the laser output measuring mode, the laser output automatic correction mode, and the laser output manual correction mode, the main controller 62 performs the monitoring related to output of the laser beam LW. In addition, when executing a process in each operation mode; that is, the laser output measuring mode, the laser output automatic correction mode, and the laser output manual correction mode, the main controller 62 may monitor various components and mechanisms of the laser processing device 10A.

Further, for example, in addition to when the main controller 62 executes a process in each operation, that is, the laser output measuring mode, the laser output automatic correction mode, and the laser output manual correction mode, the laser processing device 10A is configured to monitor the various components and mechanisms of the laser processing device 10A at a predetermined timing.

The monitoring result, that is, the monitoring data Da obtained by the monitoring, is stored in the storage 63 of the controller unit 11. That is, the storage 63 stores the monitoring data Da obtained by the main controller 62. The monitoring data Da includes, for example, data related to the output of the laser beam LW. The monitoring data Da includes, for example, an item notified to a user of the laser processing device 10A. The monitoring data Da may include an item assumed to affect the quality of printing performed by the laser beam LW. The monitoring data Da may further include an item that may be used to determine whether a component of the laser processing device 10A needs maintenance.

An example of items in the monitoring data Da will now be described.

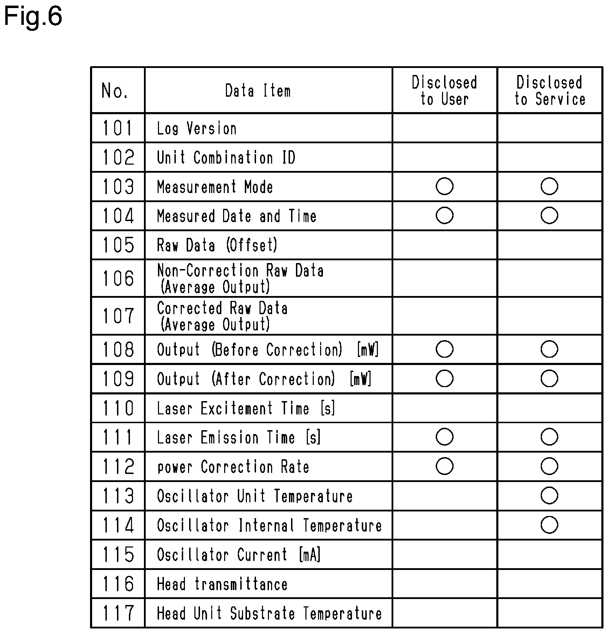

Fig. 6 shows items of data obtained when a process is executed in each operation mode; that is, the laser output measuring mode, the laser output automatic correction mode, and the laser output manual correction mode, and stored in the storage 63 of the controller unit 11. Item numbers 101 to 117 given to the items shown in Fig. 6 are used for the sake of convenience and are not stored in the storage 63 as the monitoring data Da. Whenever a process is executed in each operation mode; that is, the laser output measuring mode, the laser output automatic correction mode, and the laser output manual correction mode, the main controller 62 obtains data on the item numbers 101 to 117 as the monitoring data Da and stores the data in the storage 63. More specifically, when performing the laser output measurement during control in each operation mode; that is, the laser output measuring mode, the laser output automatic correction mode, and the laser output manual correction mode, the main controller 62 obtains data on the item numbers 101 to 117 and stores the data in the storage 63.

The item number 101 denotes log version, which is version information in a log format for information stored by the main controller 62 in the storage 63.

The item number 102 denotes unit combination ID, which is identification information of the light source unit 12 stored in the storage 33 of the light source unit 12 and identification information of the head unit 13 stored in the storage 43 of the head unit 13.

The item number 103 denotes measurement mode, which is data indicating in which operation mode the process is executed among the laser output measuring mode, the automatic correction mode, and the manual correction mode.

The item number 104 denotes measured date and time, which is time data at the time of starting a process in the operation mode of the item number 103. The time data is, for example, date and time. The main controller 62 obtains time data from the clock and stores the time data in the storage 63.

The item number 105 denotes raw data (offset), which is a digital data output from the monitor portion 47 when the laser beam LW is not emitted from the laser light source 34. In an example, when the laser beam LW for performing the laser output measurement is not emitted, the main controller 62 obtains a digital value output from the monitor portion 47. The main controller 62 stores the obtained digital value as data of the raw data (offset) in the storage 63.

The item number 106 denotes non-correction raw data (average output), which is an average value of digital values output from the monitor portion 47 when the laser light source 34 is emitting the laser beam LW without output correction during the laser output measurement. The laser beam LW without output correction corresponds to a laser beam that is emitted by the laser light source 34 when supplied with the laser power voltage PL and the oscillator current CL that are in the same condition as the time of shipping the laser processing device 10A. In an example, the main controller 62 obtains digital values output from the monitor portion 47 a number of times in a predetermined time during which the laser beam LW is emitted, and calculates an average value of the obtained digital values. The main controller 62 stores the calculated average value as data of the non-correction raw data (average output) in the storage 63.

The item number 107 denotes corrected raw data (average output), which is an average value of digital values output from the monitor portion 47 when the laser light source 34 is emitting the laser beam LW with output correction during a laser output measurement. The laser beam LW with output correction is a laser beam, the output of which was corrected at the correction rate used when the output was corrected immediately before the laser output measurement was executed. In an example, the main controller 62 obtains digital values output from the monitor portion 47 a number of times during emission of the laser beam LW for the laser output measurement and calculates an average value of the obtained digital values. The main controller 62 stores the calculated average value as data of the corrected raw data (average output) in the storage 63.

The item number 108 denotes output (before correction), which is output of the laser beam LW without output correction when the laser output measuring mode is selected. The main controller 62 calculates an output of a laser beam LW without output correction using the raw data of the item number 105 and the non-correction raw data of the item number 106. The unit of the output is, for example, "mW." The main controller 62 stores the calculated output as the output (before correction) in the storage 63.

When the laser output automatic correction mode or the laser output manual correction mode is selected, the main controller 62 stores the output of the laser beam LW that was measured immediately before the corresponding mode was selected as data of the output (before correction) in the storage 63.

The item number 109 denotes output (after correction), which is output of the laser beam LW with output correction. The main controller 62 calculates an output of a laser beam LW without output correction using the raw data of the item number 105 and the corrected raw data of the item number 107. The unit of the output is, for example, "mW." The main controller 62 stores the calculated output as data of the output (after correction) in the storage 63.

The item number 110 denotes laser excitement time, which is an accumulated time of laser excitement at the time of starting the process in the operation mode of the item number 103. The light source controller 32 accumulates time during which the oscillator current CL is supplied to the laser light source 34, for example, from the time of shipping the laser processing device 10A. The main controller 62 obtains the accumulated value of the time during which the oscillator current CL is supplied to the laser light source 34 from the light source controller 32 and stores the accumulated value as data of the laser excitement time in the storage 63. The unit of the laser excitement time is, for example, "s (second)."

The item number 111 denotes laser emission time, which is an accumulated time of laser emission at the time of starting the process in the operation mode of the item number 103. The main controller 62 accumulates time during which the laser beam LW is emitted to process the workpiece W from, for example, the time of shipping the laser processing device 10A. The time during which the laser beam LW is emitted to process the workpiece W is, for example, from when a start of processing is instructed when the processing mode is selected until the processing on the workpiece W ends. The main controller 62 stores the accumulated value of time during which the laser beam LW is emitted to process the workpiece W as data of the laser emission time (accumulation time data) in the storage 63. The unit of the laser emission time is, for example, "s (second)."

The item number 112 denotes power correction rate, which is a correction rate applied to the output of the laser beam LW with output correction emitted during the laser output measurement. The main controller 62 stores the correction rate applied to the output of the laser beam LW as the power correction rate in the storage 63.

The item number 113 denotes oscillator unit temperature, which is a temperature measured by the temperature sensor arranged on the oscillator unit substrate of the light source controller 32. When a process starts in the operation mode of the item number 103, the main controller 62 obtains a present measurement result of the temperature sensor arranged on the oscillator unit substrate through the light source controller 32. The main controller 62 stores the obtained measurement result as the oscillator unit temperature in the storage 63. Alternatively, the main controller 62 may store a measurement value of the temperature sensor arranged on the oscillator unit substrate at the time of starting to emit the laser beam LW for the laser output measurement as data of the oscillator unit temperature in the storage 63.

The item number 114 denotes oscillator internal temperature, which is a temperature measured by the temperature sensor of the laser oscillator 34a configured to measure the temperature of the inside of the laser oscillator 34a. When a process starts in the operation mode of the item number 103, the main controller 62 obtains the present measurement result of the temperature sensor of the laser oscillator 34a through the light source controller 32. The main controller 62 stores the obtained measurement result as the oscillator internal temperature in the storage 63. Alternatively, the main controller 62 may store a measurement value of the temperature sensor of the laser oscillator 34a at the time of starting to emit the laser beam LW for the laser output measurement as data of the oscillator internal temperature in the storage 63.

The item number 115 denotes oscillator current, which is a value of the oscillator current CL supplied to the laser light source 34 during the laser output measurement. The light source controller 32 transmits the value of the oscillator current CL supplied to the laser light source 34 during emission of the laser beam LW for the laser output measurement to the main controller 62. The main controller 62 extracts the maximum value and the minimum value from the values of the oscillator current CL output from the light source controller 32. The main controller 62 stores the maximum value and the minimum value as maximum value data and minimum value data of the oscillator current in the storage 63. The main controller 62 also calculates an average value of the values of the oscillator current CL output from the light source controller 32. The main controller 62 stores the calculated average value as average value data of the oscillator current in the storage 63. The unit of the oscillator current is, for example, "mA."

The item number 116 denotes head transmittance, which is a rate (%) of output of the laser beam LW at the processing point to output of the laser beam LW at the laser light source 34. The output of the laser beam LW at the laser light source 34 may be obtained, for example, using a measurement result of the power monitor of the laser light source 34. Alternatively, the output of the laser beam LW at the laser light source 34 may be calculated by the main controller 62 based on the oscillator current CL. The output of the laser beam LW at the processing point may be obtained, for example, using a measurement result of the monitor portion 47. The main controller 62 obtains a measurement result of the power monitor of the laser light source 34 measured during emission of the laser beam LW for the laser output measurement through the light source controller 32. The main controller 62 also obtains a measurement result of the monitor portion 47 measured during emission of the laser beam LW for the laser output measurement through the head controller 42. The main controller 62 calculates the rate of the output of the laser beam LW at the processing point to the output of the laser beam LW at the laser light source 34 using the measurement result of the power monitor of the laser light source 34 and the measurement result of the monitor portion 47. The main controller 62 stores the calculated rate as data of the head transmittance in the storage 63.

The item number 117 denotes head unit substrate temperature, which is a temperature measured by the temperature sensor arranged on the head unit substrate of the head controller 42. When a process starts in the operation mode of the item number 103, the main controller 62 obtains the present measurement result of the temperature sensor arranged on the head unit substrate through the head controller 42. The main controller 62 stores the obtained measurement result as data of the head unit substrate temperature in the storage 63. Alternatively, the main controller 62 may store a measurement value of the temperature sensor arranged on the head unit substrate at the time of starting to emit the laser beam LW for the laser output measurement as data of the head unit substrate temperature in the storage 63.

As shown in Figs. 2 and 6, the main controller 62 controls the laser output check screen 73 (monitoring data display screen) including presentation of at least part of the monitoring data Da on the display 71.

In an example, the main controller 62 shows, on the display 71, predetermined items in the monitoring data that are to be shown and are obtained during execution of each operation mode; that is, the laser output measuring mode, the automatic correction mode, and the manual correction mode. The main controller 62 shows, on the display 71, the laser output check screen 73 including presentation of data in the predetermined items that are to be shown. The laser output check screen 73 includes, for example, a monitoring data display region 75. Of the obtained monitoring data, data in the predetermined items that are to be shown are shown in the monitoring data display region 75.

The main controller 62 is configured to switch a display mode in which the laser output check screen 73 is displayed between a first display mode that shows only first display data D1 of the monitoring data Da and a second display mode that shows at least second display data D2 of the monitoring data Da. In an example, the main controller 62 is configured to switch the display mode in which the laser output check screen 73 is displayed between a first display mode that displays only the first display data D1 and a second display mode that displays the first display data D1 and the second display data D2. Fig. 4 is an example of the laser output check screen 73 displayed in the first display mode. Fig. 5 is an example of the laser output check screen 73 displayed in the second display mode.

The main controller 62 executes an authentication process that permits the display 71 to show the laser output check screen 73 in the second display mode. The main controller 62 executes, for example, a password authentication process.

As shown in Fig. 3, when the power key 68 is operated to activate the laser processing device 10A, the main controller 62 shows the initial screen 76 on the display 71. The initial screen 76 includes, for example, a password input section 77. The operating portion 72 is operated to input a password into the password input section 77. When a password is input into the password input section 77, the main controller 62 executes a password authentication process that verifies the password input into the password input section 77 and a password stored in advance in the storage 63. When a password is not input into the password input section 77, that is, the password authentication process is not executed, as shown in Fig. 4, the main controller 62 displays the laser output check screen 73 in the first display mode.

As shown in Figs. 4 and 6, when the laser output check screen 73 is displayed in the first display mode, the main controller 62 shows only the first display data D1 of the monitoring data Da, stored in the storage 63, in the monitoring data display region 75. The first display data D1 includes data that allows the output state of the laser beam LW to be checked and data that allows the setting related to the output of the laser beam LW to be checked. The first display data D1 includes, for example, data pieces in the items of the item numbers 103, 104, 108, 109, 111, and 112, that is, data pieces with the item numbers 101 to 117 having a "o" mark in the "disclosed to user" column shown in Fig. 6. Data on the items of the item numbers 108 and 109 correspond to data that allows the output state of the laser beam LW to be checked. Data on the item of the item number 108 corresponds to data that allows the setting related to the output of the laser beam LW to be checked. The value of the output of the laser beam LW that is set in the laser processing device 10A will be found with reference to the data on the item of the item number 108.

Fig. 4 shows an example of the laser output check screen 73 in which a laser output initial rate is shown in the monitoring data display region 75. The laser output initial rate is a rate (%) of output of the laser beam LW without output correction to output of the laser beam LW without output correction at the time of shipping. The laser output initial rate is calculated by the main controller 62 using monitoring data obtained during the laser output measurement. The first display data D1 may include data of the laser output initial rate. In Fig. 4, numerals of the first display data D1 are replaced with "x" and schematically shown. In an actual case, numerals are shown instead of "x." The order and layout of presentations of the first display data D1 shown in Fig. 4 may be changed.

The laser output check screen 73 includes a check box 78 and a check box 79 in the monitoring data display region 75. When the laser output check screen 73 is displayed in the first display mode, if the check box 78 is checked, the main controller 62 shows, in the monitoring data display region 75, only the first display data D1 of the monitoring data obtained during a process executed in the laser output measuring mode. When the laser output check screen 73 is displayed in the first display mode, if the check box 79 is checked, the main controller 62 shows, in the monitoring data display region 75, the first display data D1 of the monitoring data obtained during a process executed in the laser output automatic correction mode and the laser output manual correction mode.

As shown in Figs. 3, 5, and 6, the main controller 62 performs verification on the password input to the password input section 77 and the password stored in advance in the storage 63. When the two passwords match, the main controller 62 allows the display 71 to show the laser output check screen 73 in the second display mode. When the authentication process permits the display 71 to show the laser output check screen 73 in the second display mode, the main controller 62 displays the laser output check screen 73 in the second display mode on the display 71.

When the laser output check screen 73 is displayed in the second display mode, the main controller 62 shows the first display data D1 and the second display data D2 of the monitoring data Da, stored in the storage 63, in the monitoring data display region 75. The second display data D2 differs from the first display data D1. The second display data D2 includes, for example, data for checking whether the laser processing device 10A has an anomaly. Of the data with the item numbers 101 to 117 shown in Fig. 6, the second display data D2 includes, for example, data with the item numbers 113 and 114. That is, when the laser output check screen 73 is displayed in the second display mode, the main controller 62 shows, for example, data on the items having a "o" mark in the "disclosed to service (maintenance)" column shown in Fig. 6 in the monitoring data display region 75. Data on the items of the item numbers 113 and 114 is referred to when determining whether the laser oscillator 34a has an anomaly.

The order and layout of presentations of the second display data D2 shown in Fig. 5 may be changed. In Fig. 5, numerals of the first display data D1 and the second display data D2 are replaced with "x" and schematically shown. In an actual case, numerals are shown instead of "x."

When the laser output check screen 73 is displayed in the second display mode, if the check box 78 is checked, the main controller 62 shows, in the monitoring data display region 75, the first display data D1 and the second display data D2 of the monitoring data obtained during a process executed in the laser output measuring mode. When the laser output check screen 73 is displayed in the second display mode, if the check box 79 is checked, the main controller 62 shows, in the monitoring data display region 75, the first display data D1 and the second display data D2 of the monitoring data obtained during a process executed in the laser output automatic correction mode and the laser output manual correction mode.

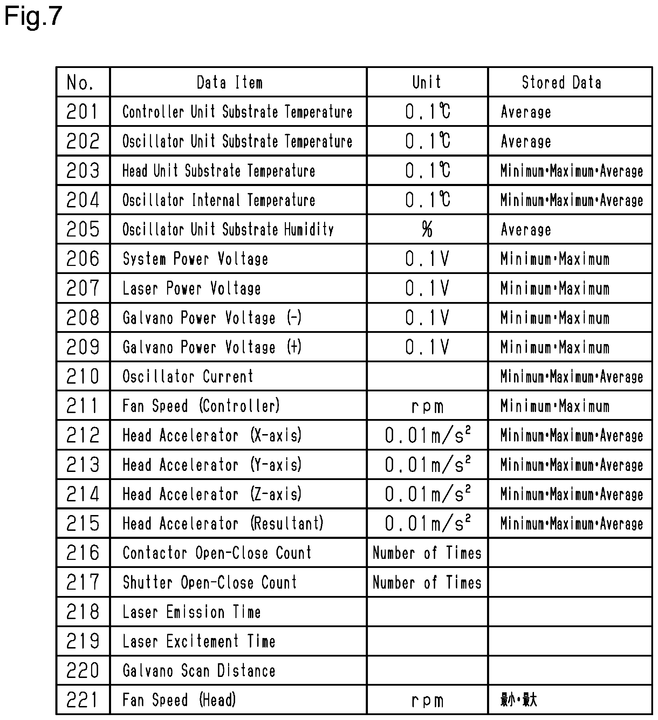

Fig. 7 shows data items obtained by regular monitoring performed by the laser processing device 10A. Item numbers 201 to 221 denoting the items shown in Fig. 7 are used for the sake of convenience and are not stored in the storage 63 as the monitoring data Da. The items of the item numbers 201 to 221 are monitored at a frequency that is set for each item while the controller unit 11 is activated. Data on the items of the item numbers 201 to 221 is stored in the storage 63 at the set frequency. The data on the items of the item numbers 201 to 221 is stored in the storage 63 for several years. In an example, the data on the items of the item numbers 201 to 221 is stored in the storage 63 for seven years.

The item number 201 denotes controller unit substrate temperature, which is a temperature measured by the temperature sensor arranged on the controller unit substrate of the main controller 62. The main controller 62 obtains a measurement result of the temperature sensor arranged on the controller unit substrate at each predetermined time. In an example, the main controller 62 obtains a measurement result of the temperature sensor arranged on the controller unit substrate each second. Whenever a predetermined period elapses, the main controller 62 calculates an average value of measurement results measured by the temperature sensor arranged on the controller unit substrate during the predetermined period and stores the average value as data of the controller unit substrate temperature in the storage 63. In an example, the main controller 62 calculates an average value of measurement results of the temperature sensor arranged on the controller unit substrate during each thirty minute predetermined time period and stores the average value as data of the controller unit substrate temperature in the storage 63. The unit of the controller unit substrate temperature is, for example, "0.1°C."

The item number 202 denotes oscillator unit substrate temperature, which is a temperature measured by the temperature sensor arranged on the oscillator unit substrate of the light source controller 32. The main controller 62 obtains a measurement result of the temperature sensor arranged on the oscillator unit substrate through the light source controller 32 at each predetermined time. In an example, the main controller 62 obtains a measurement result of the temperature sensor arranged on the oscillator unit substrate each second. Whenever a predetermined period elapses, the main controller 62 calculates an average value of measurement results measured by the temperature sensor arranged on the oscillator unit substrate during the predetermined period and stores the average value as data of the oscillator unit substrate temperature in the storage 63. In an example, the main controller 62 calculates an average value of measurement results of the temperature sensor arranged on the oscillator unit substrate during each thirty minute predetermined time period and stores the average value as data of the oscillator unit substrate temperature in the storage 63. The unit of the oscillator unit substrate temperature is, for example, "0.1°C."

The item number 203 denotes head unit substrate temperature, which is a temperature measured by the temperature sensor arranged on the head unit substrate of the head controller 42. The main controller 62 obtains a measurement result of the temperature sensor arranged on the head unit substrate through the head controller 42 at each predetermined time. In an example, the main controller 62 obtains a measurement result of the temperature sensor arranged on the head unit substrate each second. Whenever a predetermined period elapses, the main controller 62 extracts the minimum value and the maximum value from measurement results of the temperature sensor arranged on the head unit substrate measured during the predetermined period. The main controller 62 stores the minimum value and the maximum value, which are extracted, as minimum value data and maximum value data of the head unit substrate temperature in the storage 63. In an example, the main controller 62 extracts the minimum value and the maximum value from measurement results of the temperature sensor arranged on the head unit substrate during each thirty minute predetermined time period and stores the minimum value and the maximum value as minimum value data and maximum value data of the head unit substrate temperature in the storage 63. Also, whenever a predetermined period elapses, the main controller 62 calculates an average value of measurement results measured by the temperature sensor arranged on the head unit substrate during the predetermined period and stores the average value as average value data of the head unit substrate temperature in the storage 63. In an example, the main controller 62 calculates an average value of measurement results of the temperature sensor arranged on the head unit substrate during each thirty minute predetermined time period and stores the average value as average value data of the head unit substrate temperature in the storage 63. The unit of the head unit substrate temperature is, for example, "0.1°C."

The item number 204 denotes oscillator internal temperature, which is a temperature measured by the temperature sensor arranged inside the laser oscillator 34a. The main controller 62 obtains a measurement result of the temperature sensor of the laser oscillator 34a through the light source controller 32 at each predetermined time. In an example, the main controller 62 obtains a measurement result of the temperature sensor of the laser oscillator 34a each second. Whenever a predetermined period elapses, the main controller 62 extracts the minimum value and the maximum value from the measurement results of the temperature sensor measured during the predetermined period. The main controller 62 stores the minimum value and the maximum value, which are extracted, as minimum value data and maximum value data of the oscillator internal temperature in the storage 63. In an example, the main controller 62 extracts the minimum value and the maximum value from measurement results of the temperature sensor of the laser oscillator 34a during each thirty minute predetermined time period and stores the minimum value and the maximum value as minimum value data and maximum value data of the oscillator internal temperature in the storage 63. Also, whenever a predetermined period elapses, the main controller 62 calculates an average value of measurement results measured by the temperature sensor of the laser oscillator 34a during the predetermined period and stores the average value as average value data of the oscillator internal temperature in the storage 63. In an example, the main controller 62 calculates an average value of measurement results of the temperature sensor of the laser oscillator 34a during each thirty minute predetermined time period and stores the average value as average value data of the oscillator internal temperature in the storage 63. The unit of the oscillator internal temperature is, for example, "0.1°C."

The item number 205 denotes oscillator unit substrate humidity, which is humidity measured by the humidity sensor arranged on the oscillator unit substrate of the light source controller 32. The main controller 62 obtains a measurement result of the humidity sensor arranged on the oscillator unit substrate at each predetermined time. In an example, the main controller 62 obtains a measurement result of the humidity sensor each second. Whenever a predetermined period elapses, the main controller 62 calculates an average value of measurement results measured by the humidity sensor arranged on the oscillator unit substrate during the predetermined period and stores the average value as data of the oscillator unit substrate humidity in the storage 63. In an example, the main controller 62 calculates an average value of measurement results of the humidity sensor arranged on the oscillator unit substrate during each thirty minute predetermined time period and stores the average value as data of the oscillator unit substrate humidity in the storage 63. The unit of the oscillator unit substrate humidity is "%."

The item number 206 denotes system power voltage, which is a value of the system power voltage PS supplied from the power circuit 64. The power circuit 64 transmits the value of the system power voltage PS to the main controller 62. In an example, the power circuit 64 transmits a value of the system power voltage PS to the main controller 62 at each predetermined time. The power circuit 64 transmits a value of the system power voltage PS to the main controller 62, for example, each second. Whenever a predetermined period elapses, the main controller 62 extracts the minimum value and the maximum value from values of the system power voltage PS transmitted during the predetermined period. The main controller 62 stores the minimum value and the maximum value, which are extracted, as minimum value data and maximum value data of the system power voltage in the storage 63. For example, the main controller 62 extracts the minimum value and the maximum value of the system power voltage PS during each thirty minute predetermined time period and stores the minimum value and the maximum value as minimum value data and maximum value data of the system power voltage in the storage 63. The unit of the system power voltage is, for example, "0.1 V."

The item number 207 denotes laser power voltage, which is a value of the laser power voltage PL supplied from the power circuit 64 to the light source controller 32. The power circuit 64 transmits the value of the laser power voltage PL to the main controller 62. In an example, the power circuit 64 transmits a value of the laser power voltage PL to the main controller 62 at each predetermined time. The power circuit 64 transmits a value of the laser power voltage PL to the main controller 62, for example, each second. Whenever a predetermined period elapses, the main controller 62 extracts the minimum value and the maximum value from the values of the laser power voltage PL transmitted during the predetermined period. The main controller 62 stores the minimum value and the maximum value, which are extracted, as minimum value data and maximum value data of the laser power voltage in the storage 63. For example, the main controller 62 extracts the minimum value and the maximum value of the laser power voltage PL during each thirty minute predetermined time period and stores the minimum value and the maximum value as minimum value data and maximum value data of the laser power voltage in the storage 63. The unit of the laser power voltage is, for example, "0.1 V."

The item number 208 denotes galvano power voltage (-), which is a value of the negative galvano power voltage PG2 supplied from the power circuit 64 to the scanner 45. The power circuit 64 transmits the value of the negative galvano power voltage PG2 to the main controller 62. In an example, the power circuit 64 transmits the value of the negative galvano power voltage PG2 to the main controller 62 at each predetermined time. The power circuit 64 transmits a value of the negative galvano power voltage PG2 to the main controller 62, for example, each second. Whenever a predetermined period elapses, the main controller 62 extracts the minimum value and the maximum value from the values of the negative galvano power voltage PG2 transmitted during the predetermined period. The main controller 62 stores the minimum value and the maximum value, which are extracted, as minimum value data and maximum value data of the galvano power voltage (-) in the storage 63. For example, the main controller 62 extracts the minimum value and the maximum value of the negative galvano power voltage PG2 during each thirty minute predetermined time period and stores the minimum value and the maximum value as minimum value data and maximum value data of the galvano power voltage (-) in the storage 63. The unit of the galvano power voltage (-) is, for example, "0.1 V."

The item number 209 denotes galvano power voltage (+), which is a value of the positive galvano power voltage PG1 supplied from the power circuit 64 to the scanner 45. The power circuit 64 transmits the value of the positive galvano power voltage PG1 to the main controller 62. In an example, the power circuit 64 transmits the value of the positive galvano power voltage PG1 to the main controller 62 at each predetermined time. The power circuit 64 transmits a value of the positive galvano power voltage PG1 to the main controller 62, for example, each second. Whenever a predetermined period elapses, the main controller 62 extracts the minimum value and the maximum value from the values of the positive galvano power voltage PG1 transmitted during the predetermined period. The main controller 62 stores the minimum value and the maximum value, which are extracted, as minimum value data and maximum value data of the galvano power voltage (+) in the storage 63. For example, the main controller 62 extracts the minimum value and the maximum value of the positive galvano power voltage PG1 during each thirty minute predetermined time period and stores the minimum value and the maximum value as minimum value data and maximum value data of the galvano power voltage (+) in the storage 63. The unit of the galvano power voltage (+) is, for example, "0.1 V."

The item number 210 denotes oscillator current, which is a value of the oscillator current CL supplied to the laser light source 34. The light source controller 32 transmits the value of the oscillator current CL supplied to the laser light source 34 to the main controller 62. In an example, the light source controller 32 transmits a value of the oscillator current CL to the main controller 62 at each predetermined time. The light source controller 32 transmits a value of the oscillator current CL to the main controller 62, for example, each second. Whenever a predetermined period elapses, the main controller 62 extracts the minimum value and the maximum value from the values of the oscillator current CL transmitted during the predetermined period. The main controller 62 stores the minimum value and the maximum value, which are extracted, as minimum value data and maximum value data of the oscillator current in the storage 63. The main controller 62 extracts the minimum value and the maximum value of the oscillator current CL, for example, during each thirty minute predetermined time period, and stores the minimum value and the maximum value as maximum value data and minimum value data of the oscillator current in the storage 63. Also, whenever a predetermined period elapses, the main controller 62 calculates an average value of the values of the oscillator current CL transmitted during the predetermined period and stores the average value as average value data of the oscillator current in the storage 63. The main controller 62 calculates an average value of the values of the oscillator current CL, for example, during each thirty minute predetermined time period, and stores the average value as average value data of the oscillator current in the storage 63.

The item number 211 denotes fan speed (controller), which is rotational speed of the fan 67 of the controller unit 11. The main controller 62 measures the number of rotations of the fan 67 at each predetermined time based on a rotation detection signal output from the rotational sensor configured to detect rotations produced by the motor driving the fan 67. In an example, the main controller 62 measures the number of rotations of the fan 67 during one minute based on the rotation detection signal. Whenever a predetermined period elapses, the main controller 62 extracts the minimum value and the maximum value of the number of rotations of the fan 67 measured during the predetermined period. The main controller 62 stores the minimum value and the maximum value, which are extracted, as minimum value data and maximum value data of the fan speed (controller) in the storage 63. The main controller 62 extracts the minimum value and the maximum value of the number of rotations of the fan 67, for example, during each thirty minute predetermined time period, and stores the minimum value and the maximum value as minimum value data and maximum value data of the fan speed (controller) in the storage 63. The unit of the fan speed (controller) is, for example, "rpm." When the controller unit 11 includes multiple fans 67, the number of rotations of each fan 67 is measured at each predetermined time, and data on the rotational speed of the fan 67 is stored in the storage 63.

The item number 212 denotes head acceleration (X-axis), which is acceleration applied to the head unit 13 in the X-axis direction and measured by the acceleration sensor 48 of the head unit 13. The head controller 42 transmits the acceleration in the X-axis direction measured by the acceleration sensor 48 to the main controller 62. In an example, the head controller 42 transmits a measurement result of acceleration applied to the head unit 13 in the X-axis direction to the main controller 62 at each predetermined time. The head controller 42 transmits a measurement result of acceleration applied to the head unit 13 in the X-axis direction to the main controller 62, for example, each second. Whenever a predetermined period elapses, the main controller 62 extracts the minimum value and the maximum value from the measurement results transmitted during the predetermined period. The main controller 62 stores the minimum value and the maximum value, which are extracted, as minimum value data and maximum value data of the head acceleration (X-axis) in the storage 63. The main controller 62 extracts the minimum value and the maximum value from measurement results of acceleration applied to the head unit 13 in the X-axis direction, for example, during each thirty minute predetermined time period, and stores the minimum value and the maximum value as minimum value data and maximum value data of the head acceleration (X-axis) in the storage 63. Also, whenever a predetermined period elapses, the main controller 62 calculates an average value of measurement results of acceleration applied to the head unit 13 in the X-axis direction and stores the average value as average value data of the head acceleration (X-axis) in the storage 63. The main controller 62 calculates an average value of measurement results of acceleration applied to the head unit 13 in the X-axis direction, for example, during each thirty minute predetermined time period, and stores the average data as average value data of the head acceleration (X-axis) in the storage 63. The unit of the head acceleration (X-axis) is, for example, "0.01 m/s²." The minimum value, the maximum value, and the average value of the head acceleration (X-axis) may include gravitational acceleration.

The item number 213 denotes head acceleration (Y-axis), which is acceleration applied to the head unit 13 in the Y-axis direction and measured by the acceleration sensor 48 of the head unit 13. The head controller 42 transmits the acceleration in the Y-axis direction measured by the acceleration sensor 48 to the main controller 62. In an example, the head controller 42 transmits a measurement result of acceleration applied to the head unit 13 in the Y-axis direction to the main controller 62 at each predetermined time. The head controller 42 transmits a measurement result of acceleration applied to the head unit 13 in the Y-axis direction to the main controller 62, for example, each second. Whenever a predetermined period elapses, the main controller 62 extracts the minimum value and the maximum value from the measurement results transmitted during the predetermined period. The main controller 62 stores the minimum value and the maximum value, which are extracted, as minimum value data and maximum value data of the head acceleration (Y-axis) in the storage 63. The main controller 62 extracts the minimum value and the maximum value from measurement results of acceleration applied to the head unit 13 in the Y-axis direction, for example, during each thirty minute predetermined time period, and stores the minimum value and the maximum value as minimum value data and maximum value data of the head acceleration (Y-axis) in the storage 63. Also, whenever a predetermined period elapses, the main controller 62 calculates an average value of measurement results of acceleration applied to the head unit 13 in the Y-axis direction and stores the average value as average value data of the head acceleration (Y-axis) in the storage 63. The main controller 62 calculates an average value of measurement results of acceleration applied to the head unit 13 in the Y-axis direction, for example, during each thirty minute predetermined time period, and stores the average data as average value data of the head acceleration (Y-axis) in the storage 63. The unit of the head acceleration (Y-axis) is, for example, "0.01 m/s²." The minimum value, the maximum value, and the average value of the head acceleration (Y-axis) may include gravitational acceleration.

The item number 214 denotes head acceleration (Z-axis), which is acceleration applied to the head unit 13 in the Z-axis direction and measured by the acceleration sensor 48 of the head unit 13. The head controller 42 transmits the acceleration in the Z-axis direction measured by the acceleration sensor 48 to the main controller 62. In an example, the head controller 42 transmits a measurement result of acceleration applied to the head unit 13 in the Z-axis direction to the main controller 62 at each predetermined time. The head controller 42 transmits a measurement result of acceleration applied to the head unit 13 in the Z-axis direction to the main controller 62, for example, each second. Whenever a predetermined period elapses, the main controller 62 extracts the minimum value and the maximum value from the measurement results transmitted during the predetermined period. The main controller 62 stores the minimum value and the maximum value, which are extracted, as minimum value data and maximum value data of the head acceleration (Z-axis) in the storage 63. The main controller 62 extracts the minimum value and the maximum value from measurement results of acceleration applied to the head unit 13 in the Z-axis direction, for example, during each thirty minute predetermined time period, and stores the minimum value and the maximum value as minimum value data and maximum value data of the head acceleration (Z-axis) in the storage 63. Also, whenever a predetermined period elapses, the main controller 62 calculates an average value of measurement results of acceleration applied to the head unit 13 in the Z-axis direction and stores the average value as average value data of the head acceleration (Z-axis) in the storage 63. The main controller 62 calculates an average value of measurement results of acceleration applied to the head unit 13 in the Z-axis direction, for example, during each thirty minute predetermined time period, and stores the average data as average value data of the head acceleration (Z-axis) in the storage 63. The unit of the head acceleration (Z-axis) is, for example, "0.01 m/s²." The minimum value, the maximum value, and the average value of the head acceleration (Z-axis) may include gravitational acceleration.

The item number 215 denotes head acceleration (resultant), which is a combined value of accelerations in three axial directions (i.e., X-axis direction, Y-axis direction, and Z-axis direction) applied to the head unit 13 calculated based on measurement results of the acceleration sensor 48 of the head unit 13. The main controller 62 calculates a combined value of accelerations in three axial directions at each predetermined time using measurement results of accelerations in three axial directions transmitted through the head controller 42 at each predetermined time. In an example, the main controller 62 calculates a combined value of accelerations in three axial directions each second using measurement results of accelerations in three axial directions transmitted through the head controller 42 each second. Whenever a predetermined period elapses, the main controller 62 extracts the minimum value and the maximum value from the combined values of accelerations in three axial directions calculated during the predetermined period. The main controller 62 stores the minimum value and the maximum value, which are extracted, as minimum value data and maximum value data of the head acceleration (resultant) in the storage 63. The main controller 62 extracts the minimum value and the maximum value from the combined values of accelerations in three axial directions, for example, during each thirty minute predetermined time period, and stores the minimum value and the maximum value as minimum value data and maximum value data of the head acceleration (resultant) in the storage 63. Also, whenever a predetermined period elapses, the main controller 62 calculates an average value of the combined values of accelerations in three axial directions calculated during the predetermined period and stores the average value as average value data of the head acceleration (resultant) in the storage 63. The main controller 62 calculates an average value of the combined values of accelerations in three axial directions, for example, during each thirty minute predetermined time period, and stores the average value as average value data of the head acceleration (resultant) in the storage 63. The unit of the head acceleration (resultant) is, for example, "0.01 m/s²." Gravitational acceleration may be eliminated from the minimum value, the maximum value, and the average value of the head acceleration (resultant).

The item number 216 denotes contactor open-close count, which is the number of times the contactor 66 of the controller unit 11 opens and closes. The main controller 62 measures the number of times of transmitting a control signal for opening the contactor 66 and a control signal for closing the contactor 66 to the contactor 66. In an example, the main controller 62 measures the number of times of transmission of the control signals from the time of shipping the laser processing device 10A. At each predetermined time, the main controller 62 stores the present number of times of transmitting the control signals as data of the contactor open-close count in the storage 63. For example, each second, the main controller 62 stores the present number of times of transmitting the control signals as data of the contactor open-close count in the storage 63.

The item number 217 denotes shutter open-close count, which is the number of times the shutter of the blocking mechanism 46 of the head unit 13 opens and closes. The head controller 42 measures the number of times of transmitting a closing signal, which instructs the shutter to be placed in the closed position, and the number of times of transmitting an opening signal, which instructs the shutter to be placed in the open position, to the blocking mechanism 46. In an example, the head controller 42 measures the number of times of transmitting the opening signal and the closing signal from the time of shipping the laser processing device 10A. At each predetermined time, the main controller 62 obtains the present number of times of transmitting the closing signal and the opening signal from the head controller 42 and stores the number as data of the shutter open-close count in the storage 63. For example, each second, the main controller 62 obtains the present number of times of transmitting the closing signal and the opening signal from the head controller 42 and stores the number as data of the shutter open-close count in the storage 63. When the laser processing device 10A includes multiple shutters, the head controller 42 measures the open-close count for each shutter. The main controller 62 stores the greatest open-close count as data of the shutter open-close count in the storage 63.

The item number 218 denotes laser emission time, which is an accumulated value of time during which the laser beam LW is emitted to process the workpiece W. The main controller 62 accumulates time during which the laser beam LW is emitted to process the workpiece W from, for example, the time of shipping the laser processing device 10A. The main controller 62 stores the accumulated value of time during which the laser beam LW is emitted to process the workpiece W as the laser emission time in the storage 63 at each predetermined time. For example, each second, the main controller 62 stores the present accumulated value of time during which the laser beam LW is emitted to process the workpiece W as data of the laser emission time in the storage 63.

The item number 219 denotes laser excitement time, which is an accumulated value of time during which the oscillator current CL is supplied to the laser light source 34. The light source controller 32 accumulates time during which the oscillator current CL is supplied to the laser light source 34, for example, from the time of shipping the laser processing device 10A. At each predetermined time, the main controller 62 obtains an accumulated value of time during which the oscillator current CL is supplied to the laser light source 34 from the light source controller 32 and stores the accumulated value as data of the laser excitement time in the storage 63. The main controller 62 stores an accumulated value of time during which the oscillator current CL is supplied to the laser light source 34, for example, each second, as data of the laser excitement time in the storage 63.

The item number 220 denotes galvano scan distance, which is an accumulated value of distances the laser beam LW is scanned by the scanner 45. The main controller 62 accumulates the distance that the laser beam LW is scanned by the scanner 45, for example, from the time of shipping the laser processing device 10A. When the processing mode is selected in the console 14 and an instruction to start processing is issued, based on the processing data related to the characters that are to be printed, the main controller 62 generates control data including scan position data pieces (coordinate data pieces), which correspond to processing positions on the processing subject W. The main controller 62 uses the scan position data pieces to calculate a scan distance of the laser beam LW scanned by the scanner 45. The main controller 62 accumulates scan distances that are calculated. The main controller 62 stores the accumulated value of the calculated scan distances as data of the galvano scan distance in the storage 63. For example, each second, the main controller 62 stores the present accumulated value of the calculated scan distances as data of the galvano scan distance in the storage 63.

The item number 221 denotes fan speed (head), which is rotational speed of the fan 49 of the head unit 13. The main controller 62 measures the number of rotations of the fan 49 at each predetermined time based on a rotation detection signal output from the rotational sensor configured to detect rotations produced by the motor driving the fan 49. In an example, the main controller 62 measures the number of rotations of the fan 49 during one minute based on the rotation detection signal. Whenever a predetermined period elapses, the main controller 62 extracts the minimum value and the maximum value of the number of rotations of the fan 49 measured during the predetermined period. The main controller 62 stores the minimum value and the maximum value, which are extracted, as minimum value data and maximum value data of the fan speed (head) in the storage 63. The main controller 62 extracts the minimum value and the maximum value of the number of rotations of the fan 49, for example, during each thirty minute predetermined time period, and stores the minimum value and the maximum value as minimum value data and maximum value data of the fan speed (head) in the storage 63. The unit of the fan speed (head) is, for example, "rpm." When the head unit 13 includes multiple fans 49, the number of rotations of each fan 49 at each predetermined time is measured, and data on the rotational speed of the fan 49 is stored in the storage 63.

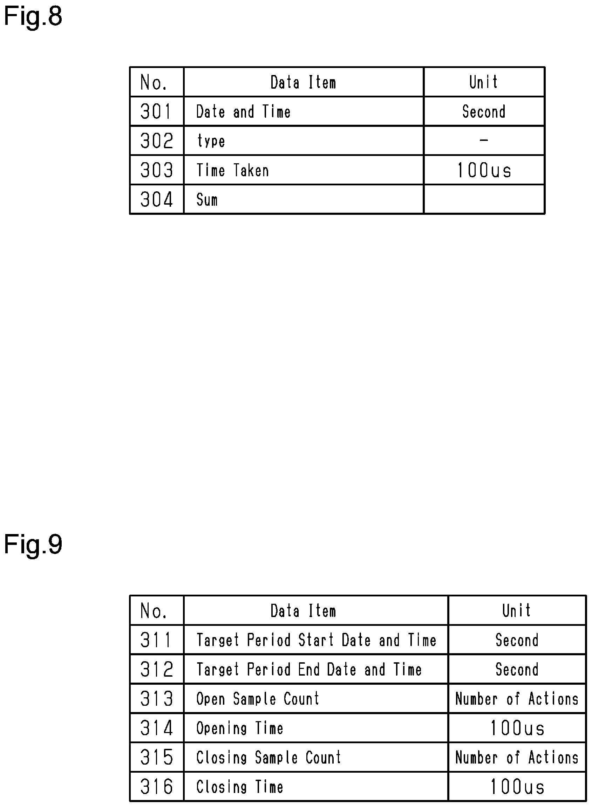

The laser processing device 10A stores, in the storage 63, data in items shown in Fig. 8 on the predetermined number of times of the most recent opening and closing actions of the shutter of the blocking mechanism 46 in addition to the shutter open-close count with the item number 217 shown in Fig. 7. The item numbers 301 to 304 denote the items are used for the sake of convenience and are not stored in the storage 63 as the monitoring data Da. The storage 63 stores, for example, data on two thousand times of the most recent opening and closing actions of the shutter in the items of the item numbers 301 to 304. When the laser processing device 10A includes multiple shutters, data on each shutter in the items of the item numbers 301 to 304 is stored in the storage 63.

The item number 301 denotes date and time, which is the number of seconds that have passed since a reference date and time when the shutter opened or closed for the first time in the predetermined number of times. When the head controller 42 transmits the closing signal or the opening signal that instructs the shutter to close or open for the first time in the predetermined number of times to the blocking mechanism 46, the main controller 62 stores data of the number of seconds that have passed since the reference date and time in the storage 63.

The item number 302 denotes type, which is data indicating whether each action of the shutter is an opening action or a closing action. When the head controller 42 transmits an opening signal to the blocking mechanism 46, the main controller 62 stores an indication that the shutter action based on the opening signal is an opening action in the storage 63. When the head controller 42 transmits a closing signal to the blocking mechanism 46, the main controller 62 stores an indication that the shutter action based on the closing signal is a closing action in the storage 63. For example, the main controller 62 stores the opening action as "0" and the closing action as "1" in the storage 63.

The item number 303 denotes time taken, which is time taken to perform each opening action and each closing action of the shutter. The main controller 62 stores the time taken to open or close the shutter for each of the predetermined number of opening and closing actions of the shutter in the storage 63. When the head controller 42 transmits the opening signal to the blocking mechanism 46, the shutter is shifted from the closed position to the open position. In this case, the head controller 42 measures time that takes the shutter to shift from the closed position to the open position. The closed position detection sensor detects that the shutter is placed in the closed position. The open position detection sensor detects that the shutter is placed in the open position. The head controller 42 measures time from when the opening signal is transmitted to the blocking mechanism 46 until the open position detection sensor detects that the shutter is placed in the open position. The head controller 42 transmits the measured time to the main controller 62. The main controller 62 stores the transmitted time as data of the time taken to perform the opening action in the storage 63. In the same manner, when the head controller 42 transmits the closing signal to the blocking mechanism 46, data of the time taken to perform the closing action of the shutter is stored in the storage 63. The unit of the time taken is, for example, "100 us."

The item number 304 denotes sum, which is a sum value of the predetermined number of opening and closing actions of the shutter. For the predetermined number of opening and closing actions of the shutter, the main controller 62 sums the times taken of the item number 303 and stores data of the sum value in the storage 63.

In addition, at every predetermined number of opening actions and closing actions of the shutter, the laser processing device 10A stores data on items shown in Fig. 9 in the storage 63. Data on the items of the item numbers 311 to 316 shown in Fig. 9 is calculated by the main controller 62 using data on the items of the item numbers 301 to 304 shown in Fig. 8. In an example, when the laser processing device 10A is configured to store data on two thousand times of the most recent opening and closing actions of the shutter in the items of the item numbers 301 to 304 shown in Fig. 8 in the storage 63, data in items with the item numbers 311 to 316 shown in Fig. 9 is stored in the storage 63 whenever the shutter has opened and closed two thousand times. The item numbers 311 to 316 denoting the items shown in Fig. 9 are used for the sake of convenience and are not stored in the storage 63 as the monitoring data Da. When the laser processing device 10A includes multiple shutters, data on each shutter in the items of the item numbers 311 to 316 is stored in the storage 63. The storage 63 stores, for example, at most four thousand pieces of data on the items shown in Fig. 9. For example, the most recent four thousand pieces of data are stored in the storage 63.

The item number 311 denotes target period start date and time, which is the number of seconds that have passed since a reference date and time when the shutter opened or closed for the first time in a predetermined number of times. When the head controller 42 transmits the closing signal or the opening signal that instructs the shutter to close or open for the first time in the predetermined number of times to the blocking mechanism 46, the main controller 62 stores the number of seconds that have passed since the reference date and time as data of the target period start date and time in the storage 63.

The item number 312 denotes target period end date and time, which is the number of seconds that have passed from the reference date and time when the shutter opened or closed for the last time in the predetermined number of times (i.e., for the time of the predetermined number). When the head controller 42 transmits the closing signal or the opening signal that instructs the shutter to close or open for the last time in the predetermined number of times to the blocking mechanism 46, the main controller 62 stores the number of seconds that have passed since the reference date and time as data of the target period end date and time in the storage 63.

The item number 313 denotes open sample count, which is the number of opening actions included in the predetermined number of opening and closing actions of the shutter. The main controller 62 uses data on the predetermined number of opening and closing actions of the shutter in the item of the item number 302 stored in the storage 63 to count the number of opening actions included in the predetermined number of opening and closing actions of the shutter. The main controller 62 stores the counted number as data of the open sample count in the storage 63. The open sample count is the number of opening actions.

The item number 314 denotes opening time, which is time taken to perform an opening action included in the predetermined number of opening and closing actions of the shutter. From data on the predetermined number of opening and closing actions of the shutter in the item of the item number 303 stored in the storage 63, the main controller 62 extracts the minimum value and the maximum value of the time taken to perform an opening action included in the predetermined number of opening and closing actions of the shutter. The main controller 62 stores the minimum value and the maximum value, which are extracted, as minimum value data and maximum value data of the opening time in the storage 63. The main controller 62 also uses the data on the predetermined number of opening and closing actions of the shutter in the item of the item number 303 stored in the storage 63 to calculate an average value of the time taken to perform an opening action included in the predetermined number of opening and closing actions of the shutter. The main controller 62 stores the calculated average value as average value data of the opening time in the storage 63. The unit of the opening time is, for example, "100 us."

The item number 315 denotes closing sample count, which is the number of closing actions included in the predetermined number of opening and closing actions of the shutter. The main controller 62 uses data on the predetermined number of opening and closing actions of the shutter in the item of the item number 302 stored in the storage 63 to count the number of closing actions included in the predetermined number of opening and closing actions of the shutter. The main controller 62 stores the counted number as data of the closing sample count in the storage 63. The closing sample count is the number of closing actions.

The item number 316 denotes closing time, which is time taken to perform a closing action included in the predetermined number of opening and closing actions of the shutter. From data on the predetermined number of opening and closing actions of the shutter in the item of the item number 303 stored in the storage 63, the main controller 62 extracts the minimum value and the maximum value of the time taken to perform a closing action included in the predetermined number of opening and closing actions of the shutter. The main controller 62 stores the minimum value and the maximum value, which are extracted, as minimum value data and maximum value data of the closing time in the storage 63. The main controller 62 also uses the data on the predetermined number of opening and closing actions of the shutter in the item of the item number 303 stored in the storage 63 to calculate an average value of the time taken to perform a closing action included in the predetermined number of opening and closing actions of the shutter. The main controller 62 stores the calculated average value as average value data of the closing time in the storage 63. The unit of the closing time is, for example, "100 us."

The main controller 62 does not necessarily have to show data on the items shown in Figs. 7 to 9 on the display 71. Preferably, the data on the items shown in Figs. 7 to 9 is configured to be output in a file.

### Operation and Advantages of Embodiment

The present embodiment has the following advantages.
(1) The laser processing device 10A processes the workpiece W with the laser beam LW. The laser processing device 10A includes the laser light source 34, which is configured to emit the laser beam LW, and the main controller 62, which controls the laser light source 34 and obtains the monitoring data Da on the laser processing device 10A. The laser processing device 10A further includes the storage 63, which stores the monitoring data Da obtained by the main controller 62. The laser processing device 10A further includes the display 71, which is configured to show the laser output check screen 73 (monitoring data display screen) including a presentation of at least part of the monitoring data Da controlled by the main controller 62. The main controller 62 is configured to switch a display mode in which the laser output check screen 73 is displayed between a first display mode that shows only first display data D1 of the monitoring data Da and a second display mode that shows at least second display data D2 of the monitoring data Da. The first display data D1 includes data that allows the output state of the laser beam LW to be checked and data that allows the setting related to the output of the laser beam LW to be checked. The second display data D2 differs from the first display data D1.

This configuration switches the screen between a laser output check screen 73 that is displayed for a user of the laser processing device 10A and a laser output check screen 73 that is displayed for a service person performing maintenance or repair of the laser processing device 10A.

In an example, the user views the laser output check screen 73 displayed in the first display mode to check the first display data D1 including data that allows the output state of the laser beam LW to be checked and data that allows the setting related to the output of the laser beam LW to be checked. Thus, the laser output check screen 73 displayed in the first display mode allows the user to check data that is included in the monitoring data Da and necessary when using the laser processing device 10A.

In an example, the service person views the laser output check screen 73 displayed in the second display mode to check the second display data D2, which differs from the first display data D1. For example, the second display data D2 may be part of the monitoring data Da that does not need to be shown when the user uses the laser processing device 10A but may need to be shown when the service person performs maintenance or repair. When checking both the first display data D1 and the second display data D2, the service person will know the state of the laser processing device 10A in detail as compared to when checking only the first display data D1. Therefore, for example, when a failure occurs in the laser processing device 10A, the service person readily identifies the cause of the failure with reference to the second display data D2 in addition to the first display data D1. This reduces the time taken for the service person to identify the cause of the failure, thereby reducing downtime of the laser processing device 10A. Furthermore, when maintenance of the laser processing device 10A is performed with reference to the second display data D2 in addition to the first display data D1, occurrence of a failure may be avoided. This limits occurrence of downtime.

The first display data D1, which includes data that allows the output state of the laser beam LW to be checked and data that allows the setting related to the output of the laser beam LW to be checked, is shown regardless of whether the display mode of the laser output check screen 73 is the first display mode or the second display mode. Thus, both the user and the service person may monitor the output of the laser beam LW with reference to the first display data D1.

(2) The second display data D2 includes data for checking whether the laser processing device 10A has an anomaly.

With this configuration, for example, the service person views the laser output check screen 73 displayed in the second display mode to check the second display data D2, which includes data for checking whether the laser processing device 10A has an anomaly, in addition to the first display data D1. The service person checks whether the laser processing device 10A has an anomaly with reference to the second display data D2. Thus, for example, when a failure occurs in the laser processing device 10A, the service person more readily identifies the cause of the failures with reference to the second display data D2 in addition to the first display data D1. This further reduces the time taken for the service person to identify the cause of the failure, thereby further reducing downtime of the laser processing device 10A.

When performing maintenance on the laser processing device 10A, the service person may refer to the second display data D2, which includes data for checking whether the laser processing device 10A has an anomaly, in addition to the first display data D1. Thus, occurrence of a failure in the laser processing device 10A is further avoided. This further limits occurrence of downtime.

(3) The second display mode is a display mode of the laser output check screen 73 showing the first display data D1 and the second display data D2.

With this configuration, when the laser output check screen 73 displayed in the second display mode is viewed, both the first display data D1 and the second display data D2 are checked at the same time. Thus, both the first display data D1 and the second display data D2 are readily checked as compared to, for example, when the second display mode is a display mode showing only the second display data D2. For example, when the laser processing device 10A has a failure, the service person views the laser output check screen 73 displayed in the second display mode to refer to both the first display data D1 and the second display data D2 at the same time. This further reduces the time taken for the service person to identify the cause of the failure, thereby further reducing downtime of the laser processing device 10A.

When performing maintenance on the laser processing device 10A, the service person checks both the first display data D1 and the second display data D2 at the same time. This reduces the time taken to perform maintenance.

(4) The main controller 62 executes an authentication process that permits the display 71 to show the laser output check screen 73 in the second display mode. When the authentication process permits the display 71 to show the laser output check screen 73 in the second display mode, the main controller 62 displays the laser output check screen 73 in the second display mode on the display 71.

With this configuration, the service person performs the authentication process so that the laser output check screen 73 is displayed in the second display mode on the display 71.

(5) The display 71 shows a screen including the password input section 77 into which a password is input. The authentication process executed by the main controller 62 is a password authentication process that verifies a password input to the password input section 77 and a password stored in advance in the storage 63. With this configuration, the authentication process is readily executed.

(6) The first display data D1 includes measured data obtained by actually measuring an output of the laser beam LW, correction rate data for correcting the output of the laser beam LW, and accumulated time data for processing with emission of the laser beam LW. The measured data obtained by actually measuring an output of the laser beam LW is the data on the items of the item numbers 108 and 109 shown in Fig. 6. The correction rate data for correcting the output of the laser beam LW is the data on the item of the item number 112 shown in Fig. 6. The accumulated time data for processing with emission of the laser beam LW is the data on the item of the item number 111 shown in Fig. 6.

With this configuration, the user and the service person check the first display data D1 on the laser output check screen 73 to check the output of the laser beam LW in the laser processing device 10A, the correction rate for correcting the output of the laser beam LW, and the laser emission time.

(7) The laser light source 34 includes the laser oscillator 34a, which outputs the laser beam LW. The second display data D2 includes internal temperature data on the laser oscillator 34a.

With this configuration, the service person displays the laser output check screen 73 in the second display mode to check the internal temperature data on the laser oscillator 34a. For example, when a failure occurs in the laser processing device 10A, the service person readily identifies the cause of the failure with reference to the internal temperature data on the laser oscillator 34a.

### Modified Examples

The present embodiment may be modified as described below. The embodiment and the following modified examples can be combined within a range where the combined modified examples remain technically consistent with each other.

The second display data D2 is not limited to the data described above. The second display data D2 may be desired data included in the monitoring data Da. For example, data may be selected as the second display data D2 from the data on the items with the item numbers 101 to 117 shown in Fig. 6 that is not selected as the first display data D1. For example, the second display data D2 may further include data on the items that do not have a "o" mark in the "disclosed to service" column in Fig. 6.

The first display data D1 is not limited to the data described above. The first display data D1 may be desired data included in the monitoring data Da. However, the first display data D1 includes data that allows the output state of the laser beam LW to be checked and data that allows the setting related to the output of the laser beam LW to be checked. For example, data may be selected as the first display data D1 from the data on the items with the item numbers 101 to 117 shown in Fig. 6. For example, the first display data D1 may further include data on the items with the item numbers 101 to 117 shown in Fig. 6 that does not have a "o" mark in the "disclosed to user" column in addition to the items having a "o" mark in the "disclosed to user" column.

In the embodiment, the password input section 77 is arranged on the initial screen 76. However, the password input section 77 does not necessarily have to be arranged on the initial screen 76. When the password input section 77 is not arranged on the initial screen 76, for example, when the power key 68 is operated to activate the laser processing device 10A, the main controller 62 initially displays the laser output check screen 73 in the first display mode on the display 71. In this configuration, the main controller 62 may show the password input section 77 on the laser output check screen 73 that is displayed in the first mode. When a password is input to the password input section 77, the main controller 62 executes the password authentication process. The main controller 62 performs verification on the password input to the password input section 77 and the password stored in advance in the storage 63. When the two passwords match, the main controller 62 switches the display mode of the laser output check screen 73 from the first display mode to the second display mode. More specifically, the main controller 62 switches the screen displayed on the display 71 from the laser output check screen 73 that is displayed in the first display mode as shown in Fig. 4 to the laser output check screen 73 that is displayed in the second display mode as shown in Fig. 5.

In the embodiment, the main controller 62 executes a process of password authentication as an authentication process that permits the display 71 to show the laser output check screen 73 in the second display mode. The authentication process is not limited to the password authentication. In an example, the main controller 62 may execute a process of known biometric authentication (e.g., facial recognition, fingerprint recognition, vein pattern recognition, or iris recognition). In another example, when a key that permits the display 71 to show the laser output check screen 73 in the second display mode is inserted into the controller unit 11, the main controller 62 may display the laser output check screen 73 in the second display mode on the display 71.

The controller unit 11 may include a switch that switches the display mode of the laser output check screen 73. In this case, the main controller 62 switches the display mode of the laser output check screen 73 in accordance with an operation of the switch. The display 71 may show a button that switches the display mode of the laser output check screen 73. In this case, when the operating portion 72 is operated to press the button, the main controller 62 switches the display mode of the laser output check screen 73.

The main controller 62 may show a display switch button on the laser output check screen 73 in the second display mode shown in Fig. 5. The display switch button is used to instruct the main controller 62 to switch the display mode of the laser output check screen 73 from the second display mod to the first display mode. When the display switch button is pressed, the main controller 62 switches the display mode of the laser output check screen 73 from the second display mode to the first display mode. More specifically, when the display switch button is pressed, the main controller 62 switches the presentation of the display 71 from the laser output check screen 73 in the second display mode as shown in Fig. 5 to the laser output check screen 73 in the first display mode as shown in Fig. 4.

When the display mode of the laser output check screen 73 is switched from the second display mode to the first display mode, for example, the main controller 62 displays the laser output check screen 73 in the first display mode on the display 71 unless the authentication process is again executed using a password input to the password input section 77.

In addition, for example, after the authentication process using the password input to the password input section 77 permits the laser output check screen 73 to be displayed in the second display mode, the main controller 62 may switch the first display mode and the second display mode whenever the operating portion 72 is operated to instruct a switch of the display mode until the controller unit 11 is deactivated. In this case, after the authentication process permits the laser output check screen 73 to be displayed in the second display mode, for example, the main controller 62 shows the display switch button on the laser output check screen 73 displayed in the first display mode. When the laser output check screen 73 is displayed in the first display mode on the display 71 and the display switch button is pressed, the main controller 62 switches the display mode of the laser output check screen 73 from the first display mode to the second display mode. More specifically, when the display switch button shown on the laser output check screen 73 in the first display mode is pressed, the main controller 62 switches presentation of the display 71 from the laser output check screen 73 in the first display mode to the laser output check screen 73 in the second display mode.

In the embodiment, the second display mode is a display mode of the laser output check screen 73 showing the first display data D1 and the second display data D2. However, the second display mode may show only the second display data D2. In this case, for example, the service person views the laser output check screen 73 displayed in the first display mode and the laser output check screen 73 displayed in the second display mode to check both the first display data D1 and the second display data D2.

The items in the monitoring data Da obtained by the main controller 62 is not limited to those in the embodiment. The main controller 62 does not necessarily have to obtain one or more of the items in the monitoring data Da that are described in the embodiment. The main controller 62 may obtain a greater number of items in the monitoring data Da than the number of the items described in the embodiment. For example, in addition to the items in the monitoring data Da described in the embodiment, the rotational speed of the fan 35 of the light source unit 12 may be obtained as the monitoring data Da.

In the embodiment, the laser manual correction mode is a mode for correcting the output of the laser beam LW at the correction rate specified by the user. However, the laser manual correction mode may be a mode for correcting the output of the laser beam LW to an output instructed by the user.

The laser processing device may have a different unit configuration.

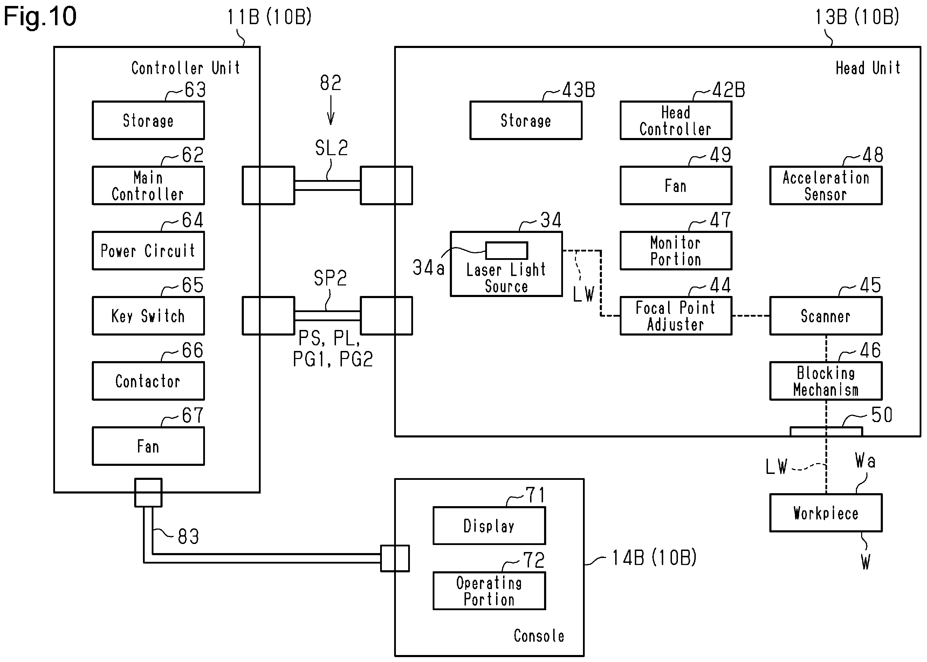

Fig. 10 shows an example of a laser processing device 10B constructed by connecting two units. In Fig. 10, the same reference characters are given to those components that are the same as the corresponding components of the embodiment. The laser processing device 10B includes a controller unit 11B, a head unit 13B, and a console 14B. The head unit 13B is connected to the controller unit 11B by the second electrical cables 82. The controller unit 11B has the same configuration as the controller unit 11 of the laser processing device 10A described above. The head unit 13B includes a head controller 42B, storage 43B, the laser light source 34, the focal point adjuster 44, the scanner 45, the blocking mechanism 46, the monitor portion 47, the acceleration sensor 48, the fan 49, and the protective glass 50. The head controller 42B has the functionalities of the light source controller 32 and the head controller 42 shown in Fig. 2. The storage 43B has the functionalities of the storage 33 and the storage 43 shown in Fig. 2. The console 14B has the same configuration as the console 14 of the laser processing device 10A described above. The laser processing device 10B, which is configured as described above, obtains the same advantages as the embodiment.

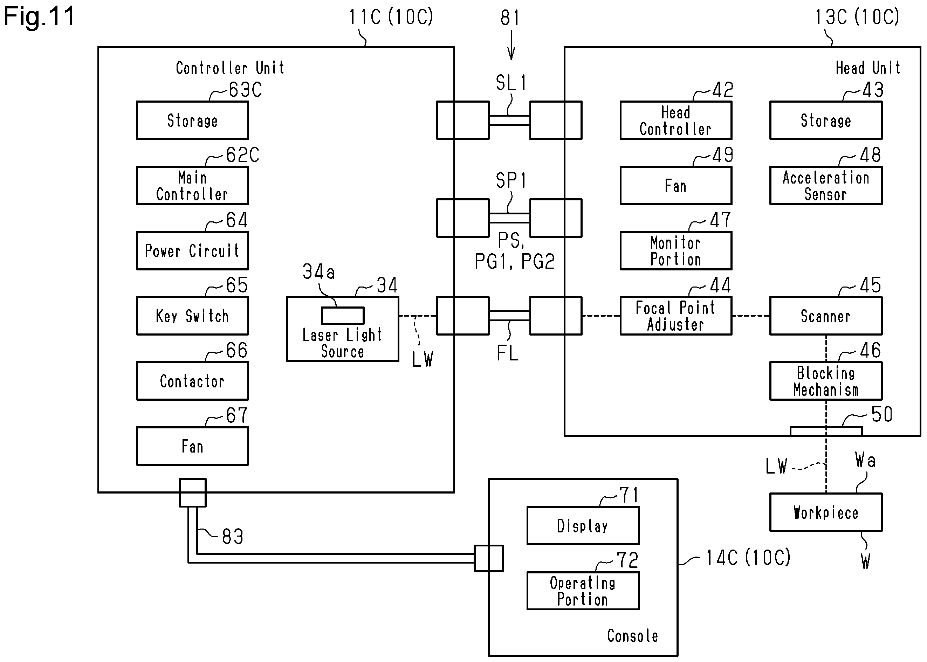

Fig. 11 shows an example of a laser processing device 10C constructed by connecting two units. In Fig. 11, the same reference characters are given to those components that are the same as the corresponding components of the embodiment. The laser processing device 10C includes a controller unit 11C, a head unit 13C, and a console 14C. The head unit 13C is connected to the controller unit 11C by the first electrical cables 81. The head unit 13C has the same configuration as the head unit 13 of the laser processing device 10A described above. The controller unit 11C includes a main controller 62C, storage 63C, the laser light source 34, the power circuit 64, the key switch 65, the contactor 66, and the fan 67. The main controller 62C has the functionalities of the main controller 62 and the light source controller 32 shown in Fig. 2. The storage 63C has the functionalities of the storage 63 and the storage 33 shown in Fig. 2. The console 14C has the same configuration as the console 14 of the laser processing device 10A described above. The laser processing device 10C, which is configured as described above, obtains the same advantages as the embodiment.

The description above illustrates examples. One skilled in the art may recognize further possible combinations and replacements of the elements and methods (manufacturing processes) in addition to those listed for purposes of describing the techniques of the present disclosure. The present disclosure is intended to include any substitute, modification, changes included in the scope of the disclosure including the claims.

### REFERENCE SIGNS LIST

10A, 10B, 10C) laser processing device
11, 11B, 11C) controller unit
12) light source unit
13, 13B, 13C) head unit
14, 14B, 14C) console
31) case
32) light source controller
33) storage
34) laser light source
34a) laser oscillator
35) fan
41) case
42, 42B) head controller
43, 43B) storage
44) focal point adjuster
45) scanner
46) blocking mechanism
47) monitor portion
48) acceleration sensor
49) fan
50) protective glass
61) case
62, 62C) main controller (controller)
63, 63C) storage
64) power circuit
65) key switch
66) contactor
67) fan
68) power key
71) display
72) operating portion
73) laser output check screen (data output check screen)
74) measuring laser emission button
75) monitoring data display region
76) initial screen
77) password input section
78) check box
79) check box
81) first electrical cable
82) second electrical cable
83) third electrical cable
Da) monitoring data
D1) first display data
D2) second display data
FL) optical fiber cable
SL1) first signal cable
SL2) second signal cable
SP1) first power cable
SP2) second power cable
CL) oscillator current
PL) laser power voltage
PS) system power voltage
PG1) positive galvano power voltage
PG2) negative galvano power voltage
LW) laser beam
W) workpiece
Wa) processing surface

## Claims

1. A laser processing device that processes a workpiece with a laser beam, the laser processing device comprising:
a laser light source configured to emit the laser beam;
a controller configured to control the laser light source and obtain monitoring data on the laser processing device;
storage that stores the monitoring data obtained by the controller; and
a display configured to show a monitoring data display screen that includes presentation of at least part of the monitoring data in accordance with a control executed by the controller, wherein
the monitoring data includes first display data and second display data, the controller is configured to switch a display mode in which the monitoring data display screen is displayed between a first display mode that shows only the first display data in the monitoring data and a second display mode that shows at least the second display data in the monitoring data,
the first display data includes data that allows an output state of the laser beam to be checked and data that allows a setting related to an output of the laser beam to be checked, and
the second display data differs from the first display data.

2. The laser processing device according to claim 1, wherein the second display data includes data for checking whether the laser processing device has an anomaly.

3. The laser processing device according to claim 1 or 2, wherein the second display mode shows the first display data and the second display data.

4. The laser processing device according to any one of claims 1 to 3, wherein
the controller executes an authentication process that permits the display to show the monitoring data display screen in the second display mode, and
when the monitoring data display screen is permitted to be shown in the second display mode on the display by the authentication process, the controller shows the monitoring data display screen in the second display mode on the display.

5. The laser processing device according to claim 4, wherein
the display shows a screen including a password input section into which a password is input, and
the authentication process includes a password authentication process that verifies the password input into the password input section and a password stored in advance in the storage.

6. The laser processing device according to any one of claims 1 to 5, wherein the first display data includes measured data obtained by actually measuring the output of the laser beam, correction rate date for correcting the output of the laser beam, and accumulated time data on time for processing with emission of the laser beam.

7. The laser processing device according to any one of claims 1 to 6, wherein
the laser light source includes a laser oscillator that outputs the laser beam, and
the second display data includes internal temperature data on the laser oscillator.
